(19) **Europäisches Patentamt / European Patent Office / Office européen des brevets**

(11) **EP 4 752 952 A1**

(12) **EUROPEAN PATENT APPLICATION**
published in accordance with Art. 153(4) EPC

(43) Date of publication:
**03.06.2026  Bulletin 2026/23**

(21) Application number: **24849673.9**

(22) Date of filing: **05.08.2024**

(51) International Patent Classification (IPC):
$H01M\ 4/133^{(2010.01)}$  $H01M\ 4/1393^{(2010.01)}$
$H01M\ 4/36^{(2006.01)}$  $H01M\ 4/587^{(2010.01)}$
$H01M\ 4/62^{(2006.01)}$  $H01M\ 4/04^{(2006.01)}$
$H01M\ 10/052^{(2010.01)}$  $H01M\ 4/02^{(2006.01)}$

(52) Cooperative Patent Classification (CPC):
H01M 4/02; H01M 4/04; H01M 4/133;
H01M 4/1393; H01M 4/36; H01M 4/587;
H01M 4/62; H01M 10/052; H01M 10/0525;
Y02E 60/10

(86) International application number:
**PCT/KR2024/011540**

(87) International publication number:
**WO 2025/029106 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.08.2023  KR 20230101870**

(71) Applicant: **LG Energy Solution, Ltd.**
**Seoul 07335 (KR)**

(72) Inventors:
• **KIM, Hak-Yoon**
  **Daejeon 34122 (KR)**
• **PARK, Tae-Soon**
  **Daejeon 34122 (KR)**
• **WHANG, Tae-Kyung**
  **Daejeon 34122 (KR)**
• **PARK, Moon-Soo**
  **Daejeon 34122 (KR)**

(74) Representative: **Hoffmann Eitle**
**Patent- und Rechtsanwälte PartmbB**
**Arabellastraße 30**
**81925 München (DE)**

(54) **LITHIUM-ION SECONDARY BATTERY COMPRISING ELECTRODE MANUFACTURED BY DRY MANUFACTURING METHOD**

(57)    A dry electrode according to the present disclosure has uniform distribution of a binder resin and/or an electrode active material in a thickness direction of an electrode active material layer, leading to high adhesion strength between the electrode active material layer and a current collector and improved shape stability of the electrode active material layer. Additionally, the dry electrode has irregular orientation of the electrode active material in the electrode active material layer. A secondary battery according to the present disclosure including the dry electrode has a reduction in Ohmic resistance with a change in charge SOC (State of charge) and generates less heat when high current is applied during fast charging, and it has a beneficial effect on safety of the battery while in operation and thermal management of the battery.

FIG. 17

EP 4 752 952 A1

**Description**

TECHNICAL FIELD

The present disclosure relates to a secondary battery including a dry electrode manufactured by a dry method.
The present application claims priority to Korean Patent Application No. 10-2023-0101870 filed on August 3, 2023 in the Republic of Korea, the disclosure of which is incorporated herein by reference.

BACKGROUND

Due to the increasing use of fossil fuels, there is a growing demand for the use of alternative energy and clean energy, and in such circumstances, many studies are being made in the field of energy generation and storage using electrochemistry. Currently, a typical example of electrochemical devices using electrical and chemical energy is secondary batteries, and the range of application of secondary batteries is gradually expanding. One of typical secondary batteries, lithium ion secondary batteries, are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium ion secondary batteries is expanding to an auxiliary power source through a grid.
A lithium ion secondary battery is manufactured by an electrode manufacturing process, an electrode assembly manufacturing process and a formation/ageing process. In general, the electrode manufacturing process includes an electrode slurry preparation process and processes of coating the electrode slurry on an electrode current collector and drying the electrode slurry. Additionally, the drying process is followed by the subsequent processes including a rolling process, a slitting process and a winding process. Among them, the electrode slurry preparation process is a process of mixing the components for forming an electrode active material layer in which electrochemical reaction occurs in the electrode, and specifically, an electrode active material which is the essential element of the electrode is mixed with an additive such as a conductive material, fillers, a binder for binding powder and adhering to the current collector, and a solvent for imparting viscosity and dispersing the power to prepare a flowable slurry.
In the electrode manufactured by the conventional slurry coating method for forming the electrode active material layer, the electrode does not have uniform distribution of the binder material in the thickness direction, and has the distribution of the binder material in a larger amount focused on the electrode active material layer surface, resulting in insufficient bond strength between the electrode active material layer and the current collector. This results from migration of the binder material to the surface layer due to evaporation of the solvent during the drying of the slurry.
To solve this problem, efforts have been devoted to dryers for uniformly drying the inner and outer area of the electrode active material layer and adjusting the solvent evaporation rate, but these dryers are very expensive and require a considerable amount of costs and time to operate them, so it is disadvantageous in terms of manufacturing process. Additionally, during the drying of the slurry, the electrode active material settles down and the electrode active material particles are packed closer together, and especially in the case of the negative electrode, the electrode structure is not advantageous for fast charging.
Accordingly, recently, many studies are being made to manufacture dry electrodes without solvents. The dry electrode may be manufactured by applying composite particles (electrode granules) including the active material and the binder resin to the current collector and compacting the spread electrode granules. The electrode granules may be manufactured by spray-drying and may be obtained by uniformly dispersing the electrode components (the electrode active material, the conductive material, the binder, etc.) in the spraying solution and atomizing it. Alternatively, the electrode active material and the binder resin may be shear-mixed in the drying condition without a solvent to prepare a composite powder of the electrode active material and the binder resin, and the composite powder may be applied to the current collector, followed by compaction. When shear-mixing in the drying condition, the binder resin may break down smaller and get fibrillated by the applied shear force to form the composite material of the fibrillated electrode active material and the binder resin.

SUMMARY

Technical Problem

The present disclosure is directed to providing a dry electrode having an electrode active material layer in which either a binder or an electrode active material or both is uniformly distributed in the thickness direction and a secondary battery including the same. Additionally, the present disclosure is further directed to providing a secondary battery in which at least one of a positive electrode or a negative electrode is a dry electrode manufactured by a dry manufacturing method and Ohmic resistance $\Omega$ for each charge SOC (state of charge) range changes.

It will be easily understood that these and other objectives and advantages of the present disclosure may be realized by the means or methods set forth in the appended claims and a combination thereof.

Technical Solution

The present disclosure relates to a lithium ion secondary battery including a dry electrode.

The dry electrode is manufactured by a dry manufacturing method,

the dry electrode includes an electrode active material layer including an electrode active material and an electrode binder,
the electrode active material layer includes granules as a result of spray-drying a composition including the electrode active material and the electrode binder, or a composite material in which the electrode active material is combined with the fibrillated electrode binder, or both,
the lithium ion secondary battery changes in Ohmic resistance with a change in charge SOC (State of charge).

According to a second aspect of the present disclosure, in the above-described aspect, the change in Ohmic resistance is a decrease of Ohmic resistance with increasing charge SOC (State of charge).

According to a third aspect of the present disclosure, in any one of the above-described aspects, the lithium ion secondary battery has a larger initial Ohmic resistance change (percent or quantity) in an SOC range than a subsequent range.

According to a fourth aspect of the present disclosure, in any one of the above-described aspects, the Ohmic resistance change (percent or quantity) is larger in a range of SOC 50% or less than in a range of SOC 50% or more.

According to a fifth aspect of the present disclosure, in any one of the above-described aspects, the electrode active material includes a negative electrode active material, and the dry electrode is a negative electrode.

According to a sixth aspect of the present disclosure, in any one of the above-described aspects, the dry electrode includes a current collector; and an electrode active material layer on the current collector, the electrode active material layer in which the granules are packed closer together, and the granules have a larger amount of the electrode binder of a surface portion than the electrode binder of a central portion based on a total weight 100 wt% of the electrode active material and the electrode binder, wherein the surface portion is an area up to 20% of a radius in a direction from a surface of the granules for the electrode to a center of the granules for the electrode, and the central portion is an area other than the surface portion.

According to a seventh aspect of the present disclosure, in any one of the above-described aspects, the surface portion is an area up to 10% of the radius in the direction from the surface of the granules for the electrode to the center of the granules for the electrode.

According to an eighth aspect of the present disclosure, in any one of the above-described aspects, the granules for the electrode have an aspect ratio of from 0.75 to 1.0.

According to a ninth aspect of the present disclosure, in any one of the above-described aspects, the granules for the electrode have a particle size ($D_{50}$) of from 0.1 $\mu$m to 1,000 $\mu$m.

According to a tenth aspect of the present disclosure, in any one of the above-described aspects, the electrode active material includes two or more types of electrode active materials.

According to an eleventh aspect of the present disclosure, in any one of the above-described aspects, the lithium ion secondary battery has a higher average value of Ohmic resistance in a range between SOC 0% and SOC 20% than an average value of Ohmic resistance in a range of SOC 80% or more.

According to a twelfth aspect of the present disclosure, in any one of the above-described aspects, the lithium ion secondary battery has a lower Ohmic resistance in a range of SOC 10% or more than in a range of SOC 10% or less.

According to a thirteenth aspect of the present disclosure, in any one of the above-described aspects, the lithium ion secondary battery has a difference between the Ohmic resistance at SOC 80% and the Ohmic resistance at SOC 5% that is 1% or more of a difference between a minimum value and a maximum value of the Ohmic resistance in an entire SOC measurement range.

According to a fourteenth aspect of the present disclosure, in any one of the above-described aspects, the lithium ion secondary battery may have at least one random tangent line having a negative gradient in a resistance change (percent or quantity) graph over an entire SOC measurement range.

Each of the embodiments may be independently implemented or in a combination of two or more of them.

Advantageous Effects

The dry electrode according to the present disclosure may have uniform distribution of the binder resin and/or the electrode active material in the thickness direction of the electrode active material layer, leading to high adhesion strength between the electrode active material layer and the current collector and improved shape stability of the electrode active material layer. Additionally, the dry electrode has irregular orientation of the electrode active material in the electrode active material layer. The secondary battery according to the present disclosure including the dry electrode has a reduction in Ohmic resistance with a change in charge SOC (State of charge) and generates less heat when high current is applied during fast charging, and it has a beneficial effect on safety of the battery while in operation and thermal management of the battery.

BRIEF DESCRIPTION OF THE DRAWINGS

The accompanying drawings illustrate the exemplary embodiments of the present disclosure and together with the foregoing disclosure, serve to provide a better understanding of the technical aspect of the present disclosure, and thus the present disclosure is not construed as being limited to the drawings.

FIG. 1 is a scanning electron microscopic (SEM) image of an electrode granule particle found in this embodiment.
FIG. 2 is a cross-sectional view of an electrode manufactured by a manufacturing method according to Example 1 of the present disclosure.
FIG. 3 is a graph showing a distribution of binder content in the thickness direction of an electrode active material layer in an electrode manufactured by a manufacturing method according to Example 1 of the present disclosure.
FIG. 4 is a cross-sectional view of an electrode manufactured by a manufacturing method according to Comparative Example 4 of the present disclosure.
FIG. 5 is a graph showing a distribution of binder content in the thickness direction of an electrode active material layer in an electrode manufactured by a manufacturing method according to Comparative Example 4 of the present disclosure.
FIG. 6 is a schematic diagram of an electrode according to an embodiment of the present disclosure.
FIG. 7 is a schematic diagram showing the calculation of a quantified binder ratio (QBR) value of an electrode layer.
FIG. 8 is a cross-sectional image of an electrode granule particle manufactured in Example 1.
FIG. 9 is a cross-sectional image of an electrode granule particle manufactured in Example 2.
FIG. 10 is a cross-sectional image of an electrode granule particle manufactured in Example 3.
FIG. 11 is a cross-sectional image of an electrode granule particle manufactured in Comparative Example 1.
FIG. 12 is a cross-sectional image of an electrode granule particle manufactured in Comparative Example 2.
FIGS. 13 and 14 are graphs showing the amount of binder resin from center to surface of electrode granule particles obtained in Examples 1 and 2 and Comparative Examples 1 and 2.
FIG. 15 is a photographic image of electrode granules immobilized in a cured epoxy resin.
FIG. 16 is a schematic diagram showing a surface portion and a central portion of an electrode granule particle of the present disclosure.
FIG. 17 shows the measured Ohmic resistance $\Omega$ for each SOC range in a battery according to each Example of the present disclosure.
FIG. 18 shows a change in measured Ohmic resistance $\Omega$ for each SOC range in a battery according to Example and Comparative Example of the present disclosure.
FIG. 19 shows ct resistance and Ohmic resistance for each SOC in a battery according to each Example of the present disclosure.

DETAILED DESCRIPTION

Hereinafter, the present disclosure will be described in detail. However, the present disclosure is not limited to the following description, and if necessary, each element may be variously modified or selectively used in combination. Accordingly, it should be understood that the present disclosure includes all changes, equivalents or substituents included in the technical aspect and scope of the present disclosure.
The term 'comprise' when used in this specification, specifies the presence of stated elements, but does not preclude the presence or addition of one or more other elements, unless the context clearly indicates otherwise.
The terms 'about' and 'substantially' as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.
Throughout the specification, 'A and/or B' refers to either A or B or both.
The terminology used herein is for the purpose of convenience, but not intended to be limiting. For example, the terms 'upper', 'lower', 'left', 'right', 'front', 'rear', 'inner' and 'outer' may be used to describe relative locations or directions between elements rather than absolute positions or to indicate locations or directions in the drawings to which reference is made. These terms include words including them and derivatives and synonyms thereof as well.

The term "glass transition temperature Tg" used herein is measured by methods commonly used in the corresponding field, and for example, may be measured by differential scanning calorimetry (DSC).

The term "porosity" as used herein refers to a fraction of voids in a structure over the total volume and is indicated in vol%, and may be used interchangeably with void fraction, void ratio or the like. In the present disclosure, the measurement of the porosity is not limited to a particular method, and according to an aspect of the present disclosure, for example, the porosity may be measured by the Brunauer-Emmett-Teller (BET) method using nitrogen gas, Hg porosimeter or ASTM D-2873. Alternatively, the net density may be calculated from the density (apparent density) of a target object, a composition ratio of materials included in the target object and the density of each component and the porosity may be calculated from a difference between the apparent density and the net density.

The term "average particle size $D_{50}$" as used herein refers to a particle size at 50% of cumulative particle size distribution of particles. The particle size such as $D_{50}$ may be measured using a laser diffraction method. Specifically, the particle size distribution is calculated by dispersing target powder in a dispersion medium, feeding it into a commercially available laser diffraction particle size measurement device (for example, Microtrac S3500) and measuring a diffraction pattern difference according to the particle size when particles pass through a laser beam. In the measurement device, the particle size $D_{50}$ may be measured by calculating the particle diameter at 50% of the cumulative particle size distribution of particles.

The "thickness" of each layer included in the electrode as used herein may indicate a value measured by known thickness measurement methods. The thickness may be, for example, a value measured using a thickness measurement device (Mitutoyo, VL-50S-B) although the thickness measurement method is not limited thereto.

The "specific surface area" as used herein may refer to a value measured by known methods for measuring the specific surface area. The specific surface area may be, for example, a value measured by a flowable or fixed method although the method for measuring the specific surface area is not limited thereto.

The present disclosure relates to a secondary battery including a dry electrode manufactured by a dry manufacturing method. The secondary battery may be a lithium ion secondary battery.

The dry electrode may include an electrode active material layer including an electrode active material and an electrode binder. Additionally, the electrode may further include a current collector, and the electrode active material layer may be present on one or two surfaces of the current collector.

In an embodiment of the present disclosure, the dry electrode may include the electrode active material layer, and the electrode active material layer may be formed by applying pressure to the electrode granule(s) so that the electrode granule(s) are packed closer together. Alternatively, the electrode active material layer may be formed by compressing the electrode powder including the electrode active material combined with the fibrillated electrode binder into a film shape. Alternatively, the electrode active material layer may be formed by mixing the granules and the electrode powder and applying pressure to the mixture so that the particles are packed closer together.

The term 'dry electrode' as used herein refers to including a result of applying pressure to the electrode granule(s) and/or the electrode powder so that the particles are packed closer together into a layered structure, i.e., the electrode active material layer. Specifically, the granules and/or the electrode powder may be applied to the current collector surface to a predetermined thickness and compressed with the current collector to manufacture the electrode, or the material itself may be packed closer together into a layered structure (or a film) having a predetermined thickness by compression and laminated with the current collector. Here, the process of spreading and pressing the granules and/or the electrode powder is performed by the dry method without using solvents, and as opposed to the conventional art involving the coating and drying of the slurry mixed with the solvent, the solvent is not used in the step of forming the electrode active material layer.

The lithium ion secondary battery according to an embodiment of the present disclosure may be manufactured by placing the positive electrode and the negative electrode with an insulation membrane between them to form an electrode assembly, placing the electrode assembly in, for example, a pouch, a cylindrical battery case or a prismatic battery case, and injecting an electrolyte. Alternatively, the lithium ion secondary battery may be manufactured by stacking the electrode assembly, filling it with an electrolyte solution, placing the obtained result in the battery case, and sealing the battery case. The insulation membrane may be either a separator or a solid electrolyte membrane or both.

In an embodiment of the present disclosure, the secondary battery according to the present disclosure may change in Ohmic resistance with a change in charge SOC (State of charge).

In the present disclosure, the secondary battery is not limited to the charging/discharging rate and the Ohmic resistance change as described below may be found in the aforementioned range. For example, the secondary battery may be charged/discharged at the rate between 0.001C and 10C, or between 0.001C and 5C.

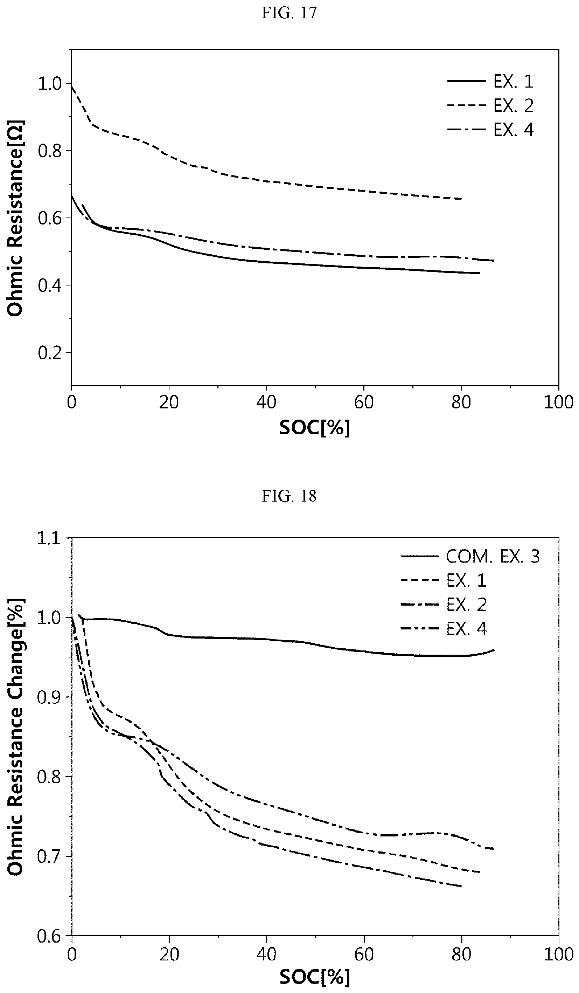

In an embodiment of the present disclosure, the secondary battery including at least one dry electrode of the negative electrode and the positive electrode may tend to reduce the Ohmic resistance with increasing SOC. FIG. 17 shows the measured Ohmic resistance for each SOC range using the lithium ion secondary battery according to the present disclosure. Additionally, referring to FIG. 18, the lithium ion secondary battery according to the present disclosure may show a negative (-) Ohmic resistance change of the battery with increasing SOC during charging. In the present disclosure, the Ohmic resistance change may be larger in the range of SOC 50% or less than in the range of SOC 50% or more. That is, the Ohmic resistance change may show a more rapidly decreasing pattern in the range of from the initial measurement SOC to SOC 20%, or to SOC 30% or to SOC 50%, than in the range of from SOC 20% to the last measurement SOC, or from SOC 30% to the last measurement SOC or from SOC 50% to the last measurement SOC.

In the specification, the initial measurement SOC may be any one point in the range between SOC 0% and SOC 10%. For example, the initial measurement SOC may be any one of 1%, 2%, 3%, 4%, 5%, 6%, 7%, 8%, 9% or 10%. Alternatively, the initial measurement SOC may correspond to a point where Ohmic resistance can be isolated. Meanwhile, the last measurement SOC may be any one point in the range of SOC 70% or more or SOC 75% or more or SOC 80% or more or SOC 90% or more. For example, the last measurement SOC may be 75%, 80%, 85%, or 90%.

Among the resistance components of an electrochemical device such as the battery, Ohmic resistance is a property that hinders the flow of current and the size of the resistance tends to change as a function of the size of the applied current. Because the dry electrode does not involves the process for induced orientation of particles such as drying of the wet slurry, there is a low tendency of the orientation of the electrode active materials in a predetermined direction in the electrode active material layer. During charging/discharging of the battery, the volume change of the electrode active material particles shows non-uniform directionality and spacing between the electrode active material particles may occur. During charging of the battery including the dry electrode, the Ohmic resistance change may result from the non-uniform directionality of the volume change of the electrode active material particles. (Despite the Ohmic resistance change) when the electrode is manufactured by the dry method, due to many exposed basal planes in the electrode active material particles, the overall resistance including Ohmic resistance decreases and the kinetics of the electrode tend to become faster. In an embodiment of the present disclosure, the dry electrode may be the negative electrode, and the negative electrode may include, as the negative electrode active material, negative electrode active materials that exhibit volume swelling during charging/discharging, such as carbon-based negative electrode active materials, silicon-based negative electrode active materials or tin-based negative electrode active materials.

Referring to FIG. 18, the electrode manufactured by the wet method in Comparative Example 3 does not show a significant reduction in Ohmic resistance. When manufacturing the electrode by drying the wet slurry, during the drying of the slurry, the electrode active material settles down at the bottom of the slurry and is densely packed, and particles show parallel arrangement, leading to high orientation. In particular, the carbon material such as graphite highly tends to be packed closer together in a manner that orientation increases. During charging/discharging of the battery, the volume change of the electrode active material may show a particular directionality, and the volume change has a small change in distance between the electrode active material particles. It is thought that the wet electrode has little or no Ohmic resistance change due to low incidence of separation between the electrode active materials by the volume change during charging/discharging. Additionally, the wet electrode is characterized in that the basal plane is least exposed in the drying process.

In an embodiment of the present disclosure, the secondary battery may have a higher average of Ohmic resistance in the range between initial measurement SOC and SOC 20% than the average of Ohmic resistance in the range of SOC 80% or more. In the present disclosure, the subsequent range refers to a range up to the last measurement SOC. For example, the initial measurement SOC may be SOC 0%, and the range of SOC 80% or more may be a range up to SOC 100% but is not limited thereto. Meanwhile, the average resistance refers to an average value calculated after measuring Ohmic resistance values at a predetermined interval, for example, at an interval of SOC 1%, and summing up the Ohmic resistance value of each SOC in the corresponding range.

In an embodiment of the present disclosure, the secondary battery may have higher Ohmic resistance at a random point in the range of SOC 10% or less than Ohmic resistance at a random point in the range of SOC 10% or more, or SOC 20% or more, or SOC 30% or more, or SOC 40% or more, or SOC 50% or more, or SOC 60% or more, or SOC 70% or more or SOC 80% or more.

In an embodiment of the present disclosure, the secondary battery may have higher Ohmic resistance at a random point in the range of SOC 20% or less than Ohmic resistance at a random point in the range of SOC 20% or more, or SOC 30% or more, or SOC 40% or more, or SOC 50% or more, or SOC 60% or more, or SOC 70% or more or SOC 80% or more.

In an embodiment of the present disclosure, the secondary battery may have higher Ohmic resistance at a random point in the range of SOC 30% or less than Ohmic resistance at a random point in the range of SOC 30% or more, or SOC 40% or more, or SOC 50% or more, or SOC 60% or more, or SOC 70% or more or SOC 80% or more.

In an embodiment of the present disclosure, the secondary battery may have lower Ohmic resistance in the range of SOC 10% or more than in the range of SOC 10% or less. In an embodiment of the present disclosure, the secondary battery may have lower Ohmic resistance in the range of SOC 20% or more than in the range of SOC 20% or less. In an embodiment of the present disclosure, the secondary battery may have lower Ohmic resistance in the range of SOC 30% or more than in the range of SOC 30% or less.

In an embodiment of the present disclosure, in the secondary battery, a difference between Ohmic resistance at SOC 80%; and Ohmic resistance at SOC 5% or the initial point at which Ohmic resistance can be isolated may be 1% or more, 3% or more, 5% or more, 10% or more, 20% or more, or 30% or more of a difference between the minimum value and the maximum value of Ohmic resistance in the entire SOC measurement range.

In an embodiment of the present disclosure, in the secondary battery, the difference between Ohmic resistance at SOC 50% and Ohmic resistance at SOC 5% or the initial point at which Ohmic resistance can be isolated may be 1% or more, 3% or more, 5% or more, 10% or more, 20% or more, or 30% or more of the difference between the minimum value and the maximum value of Ohmic resistance in the entire SOC measurement range.

In an embodiment of the present disclosure, in the secondary battery, the difference between Ohmic resistance at SOC 30% and Ohmic resistance at SOC 5% or the initial point at which Ohmic resistance can be isolated may be 1% or more, 3% or more, 5% or more, 10% or more, 20% or more or 30% or more of the difference between the minimum value and the maximum value of Ohmic resistance in the entire SOC measurement range.

In an embodiment of the present disclosure, when determining a change (percent or quantity) in resistance component, in particular, Ohmic resistance of the lithium ion secondary battery in the entire SOC measurement range, one or more random tangent lines may have a negative (-) slope. In an embodiment of the present disclosure, the initial Ohmic resistance change (percent or quantity) of the lithium ion secondary battery in the SOC range may be larger than that of the subsequent range. Preferably, the Ohmic resistance change (reduction) may refer to an Ohmic resistance reduction (percent or quantity), and the initial Ohmic resistance reduction (percent or quantity) may be larger than that of the subsequent range. In a specific embodiment, the battery may have a larger Ohmic resistance reduction (percent or quantity) in the range between the initial measurement SOC (for example, SOC 0%) and SOC 20% than in the range of SOC 20% or more. Alternatively, the battery may have a larger Ohmic resistance reduction in the range between the initial measurement SOC (for example, SOC 0%) and SOC 30% than in the range of SOC 30% or more. Alternatively, the battery may have a larger Ohmic resistance reduction in the range between the initial measurement SOC (for example, SOC 0%) and SOC 40% than in the range of SOC 40% or more. Alternatively, the battery may have a larger Ohmic resistance reduction in the range between the initial measurement SOC (for example, SOC 0%) and SOC 50% than in the range of SOC 50% or more.

Meanwhile, in the present disclosure, the Ohmic resistance change may be calculated based on the following Equation 1.

$$\text{(Equation 1)} \quad \text{Ohmic Resistance change} = (R_{soc}/R_i) \times 100$$

In the above Equation 1, $R_i$ denotes Ohmic resistance at the lowest SOC at which Ohmic resistance and charge transfer resistance can be separated from the Nyquist plot, and $R_{soc}$ denotes Ohmic resistance at each SOC.

As described above, because the dry electrode has non-uniform orientation of the electrode active material particles included in the electrode active material layer, both the binder fibrillation type electrode and the granule type electrode have the aforementioned Ohmic resistance change. In particular, the Ohmic resistance change is remarkably found in the granule type electrode as can be seen from the following embodiment, and is more remarkably found in the granule type electrode having the binder resin focused on the surface portion.

Meanwhile, according to the Joule's Law, power is proportional to the multiple of current squared by resistance and the amount of heat generated increases with increasing current and resistance during the operation of the battery. In the case of the secondary battery using the dry electrode of the present disclosure, Ohmic resistance decreases in the range in which fast charging is primarily applied, for example, in the range between SOC 15% and SOC 85% or between SOC 20% and SOC 80%, and thus it has a beneficial effect on heat management and safety of the battery.

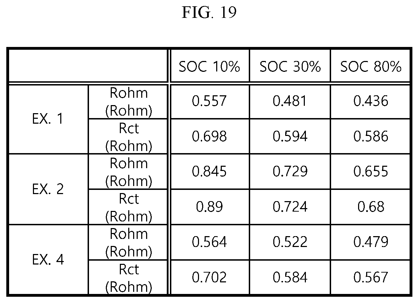

In the present disclosure, resistance as a function of SOC may be determined through an in situ EIS measurement method. EIS measurement and charging may be done at the same time by connecting two channels to one jig, charging in one channel and measuring EIS in the other channel at a predetermined time interval or every predetermined SOC. The EIS measurement may be done at the interval of SOC 1%. In an embodiment, after multiple charge/discharge cycles, the average value of EIS result values measured at each SOC may be a representative value. Here, the EIS measurement method may include commonly used EIS measurement methods for electrochemical devices. Meanwhile, the charge/discharge and EIS measurement of the battery may be done at room temperature. In this instance, each of ratios of Ohmic resistance and ct resistance was calculated from the obtained Nyquist plot. FIG. 19 shows the value and ratio of Ohmic resistance and ct resistance for each SOC measured through the batteries of Example 1, Example 2 and Example 4. Referring to FIG. 19, it was confirmed that the secondary battery according to the present disclosure has a reduction in Ohmic resistance with increasing SOC. Additionally, it was confirmed that ct resistance decreases as well. However, it was confirmed that the battery including the wet electrode according to Comparative Example 3 has a slight reduction in ct resistance but a much smaller change in Ohmic resistance with a change in SOC than the present disclosure.

Meanwhile, in the present disclosure, the SOC is a percentage (%) of the currently available battery capacity divided by the total capacity to determine the residual capacity of the battery. The SOC may be calculated using a current accumulation method. The current accumulation method may include accumulating the input/output current of the battery and adding or subtracting it to/from the initial capacity to calculate the SOC. Here, the current may be measured through a current sensor installed on the charge/discharge path of the battery.

Hereinafter, each component of the lithium ion secondary battery according to the present disclosure will be described in detail.

<Electrode granule>

In the present disclosure, the electrode granule may have a form of a composite particle including the electrode active material and the electrode binder, and optionally any substance if necessary. In an embodiment of the present disclosure, the electrode granule may be a secondary particle formed by binding two or more electrode active material particles with the electrode binder and granulating them. In the present disclosure, the electrode active material may refer to a collection of particles, and here, the diameter of each particle of the electrode active material may range from 0.05 $\mu$m to 2 $\mu$m. In an embodiment of the present disclosure, based on the total weight of the electrode granule, the electrode active material may be included in an amount of 80 wt% or more or 90 wt% or more, and the electrode binder may be included in an amount of 20 wt% or less or 10 wt% or less. In an embodiment of the present disclosure, the electrode granule may further include an electrode conductive material as the additional substance, if necessary. The electrode conductive material may be included in a range between 0.1 wt% and 20 wt%, and preferably 0.1 wt% and 10 wt% based on 100 wt% of the electrode granule. For example, the conductive material in the electrode granule may be included in a range between about 0.1 wt% and 5 wt%.

According to an embodiment of the present disclosure, the amount of the electrode active material in the electrode granule may range from 85 wt% to 98 wt%. Within the aforementioned range, the amount of the electrode binder may range from 0.5 wt% to 10 wt%, and the amount of the electrode conductive material may range from 0.5 wt% to 5 wt%. According to another embodiment, the amount of the electrode active material may range from 90 wt% to 98 wt%, the amount of the electrode binder may range from 0.5 wt% to 5 wt%, and the amount of the electrode conductive material may range from 0.5 wt% to 5 wt%.

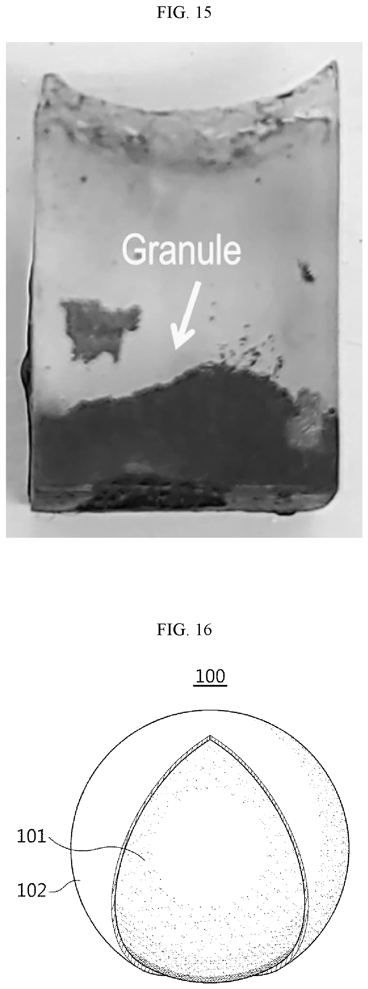

FIG. 16 shows a surface portion and a central portion in the electrode granule. Referring to FIG. 16, in the present disclosure, the electrode granule may have a larger amount of the electrode binder included in the surface portion 102 of the electrode granule than the amount of the electrode binder included in the central portion 101 of the electrode granule. Alternatively, the amount of the binder resin may tend to increase from the central portion to the surface portion of the electrode granule. The amount of the binder may refer to weight or volume.

Together with this or independently of this, the electrode granule may have a larger amount (wt%)($B_s/G_t$) of the electrode binder included in the surface portion 102 of the electrode granule than the amount (wt%)($B_c/G_t$) of the electrode binder included in the central portion 101 of the electrode granule based on the total weight 100 wt% of the electrode granule. Here, $B_c$ denotes the weight of the binder included in the central portion, $B_s$ denotes the weight of the binder included in the surface portion, and $G_t$ denotes the total weight of the electrode granule particle.

Together with this or independently of this, the electrode granule may have a larger amount (vol%)($B_s/G_t$) of the electrode binder included in the surface portion 102 of the electrode granule than the amount (vol%)($B_c/G_t$) of the electrode binder included in the central portion 101 of the electrode granule based on the total volume 100 vol% of the electrode granule. Here, $B_c$ denotes the volume of the binder included in the central portion, $B_s$ denotes the volume of the binder included in the surface portion, and $G_t$ denotes the total volume of the electrode granule particle.

Here, the surface portion may refer to an area near the electrode granule surface to a predetermined depth in a direction from the electrode granule surface toward the electrode granule center. The central portion refers to an area other than the surface portion. In an embodiment of the present disclosure, the surface portion may refer to a surface area up to 30% of the radius, specifically inward from the surface of the electrode granule, specifically toward the center of the electrode granule. In an embodiment of the present disclosure, the surface portion may refer to a surface area from the surface of the electrode granule up to 30%, 20%, 15%, 10% or 5% of the radius. Preferably, the surface portion may refer to a surface area from the surface of the electrode granule up to 20% of the radius.

Meanwhile, in an embodiment of the present disclosure, the surface portion may refer to an area from the center of the electrode granule to the electrode granule surface of 70% or more of the radius in the outward direction of the electrode granule. In an embodiment of the present disclosure, the surface portion may refer to, for example, an area up to the electrode granule surface of 80% or more, 85% or more, 90% or more, or 95% or more of the radius.

In an embodiment of the present disclosure, the center of the electrode granule may refer to a 1/2 point of the longest diameter of the electrode granule. In the present disclosure, the radius may refer to a distance from the center of the electrode granule to each point of the electrode granule surface. In an embodiment of the present disclosure, the surface portion and the central portion may be divided on the basis of a point at the same distance from each surface of the electrode granule along each radius, specifically a point at 30%, 20%, 10%, 5% or 1% of the radius from the surface.

In an embodiment of the present disclosure, in the area from the electrode granule particle center to the electrode granule surface of 90% or more of the radius, the amount of the electrode binder may be 50 wt% or more, 60 wt% or more, 70 wt% or more, 80 wt% or more, or 90 wt% or more based on the total weight 100 wt% of the electrode granule in the corresponding area.

In another embodiment of the present disclosure, in the area from the electrode granule center to the electrode granule surface of 95% or more of the particle radius, the amount of the electrode binder may be 50 wt% or more, 60 wt% or more, 70 wt% or more, 80 wt% or more or 90 wt% or more based on the total weight 100 wt% of the electrode granule in the corresponding area.

In another embodiment of the present disclosure, in the area from the electrode granule particle center to the electrode granule surface of 99% or more of the radius, the amount of the electrode binder may be 50 wt% or more, 60 wt% or more, 70 wt% or more, 80 wt% or more, or 90 wt% or more based on the total weight 100 wt% of the electrode granule in the corresponding area.

In an embodiment of the present disclosure, in the area from the electrode granule particle center to the electrode granule surface of 90% or more of the radius, the amount of the electrode binder may be 50 vol% or more, 60 vol% or more, 70 vol% or more, 80 vol% or more, or 90 vol% or more based on the total volume 100 vol% of the electrode granule in the corresponding area.

In another embodiment of the present disclosure, in the area from the electrode granule center to the electrode granule surface of 95% or more of the particle radius, the amount of the electrode binder may be 50 vol% or more, 60 vol% or more, 70 vol% or more, 80 vol% or more, or 90 vol% or more based on the total volume 100 vol% of the electrode granule in corresponding area.

In another embodiment of the present disclosure, in the area from the electrode granule particle center to the electrode granule surface of 99% or more of the radius, the amount of the electrode binder may be 50 vol% or more, 60 vol% or more, 70 vol% or more, 80 vol% or more, or 90 vol% or more based on the total volume 100 vol% of the electrode granule in the corresponding area.

In an embodiment of the present disclosure, in the electrode granule surface area up to 10% of the radius from the electrode granule particle surface, the amount of the electrode binder may be 50 wt% or more, 60 wt% or more, 70 wt% or more, 80 wt% or more, or 90 wt% or more based on the total weight 100 wt% of the electrode granule in corresponding area.

In another embodiment of the present disclosure, in the electrode granule surface area up to 5% of the radius from the electrode granule particle surface, the amount of the electrode binder may be 50 wt% or more, 60 wt% or more, 70 wt% or more, 80 wt% or more or 90 wt% or more based on the total weight 100 wt% of the electrode granule in corresponding area.

In another embodiment of the present disclosure, in the area from the electrode granule particle surface to the electrode granule surface of 1% or more of the radius, the amount of the electrode binder may be 50 wt% or more, 60 wt% or more, 70 wt% or more, 80 wt% or more, or 90 wt% or more based on the total weight 100 wt% of the electrode granule in corresponding area.

In an embodiment of the present disclosure, in the electrode granule surface area up to 10% of the radius from the electrode granule particle surface, the amount of the electrode binder may be 50 vol% or more, 60 vol% or more, 70 vol % or more, 80 vol % or more, or 90 vol % or more based on the total volume 100 vol% of the electrode granule in corresponding area.

In another embodiment of the present disclosure, in the electrode granule surface area up to 5% of the radius from the electrode granule particle surface, the amount of the electrode binder may be 50 vol% or more, 60 vol% or more, 70 vol% or more, 80 vol% or more or 90 vol% or more based on the total volume 100 vol % of the electrode granule in corresponding area.

In another embodiment of the present disclosure, in the area from the electrode granule particle surface to the electrode granule surface of 1% or more of the radius, the amount of the electrode binder may be 50 vol% or more, 60 vol% or more, 70 vol% or more, 80 vol% or more, or 90 vol% or more based on the total volume 100 vol% of the electrode granule in corresponding area.

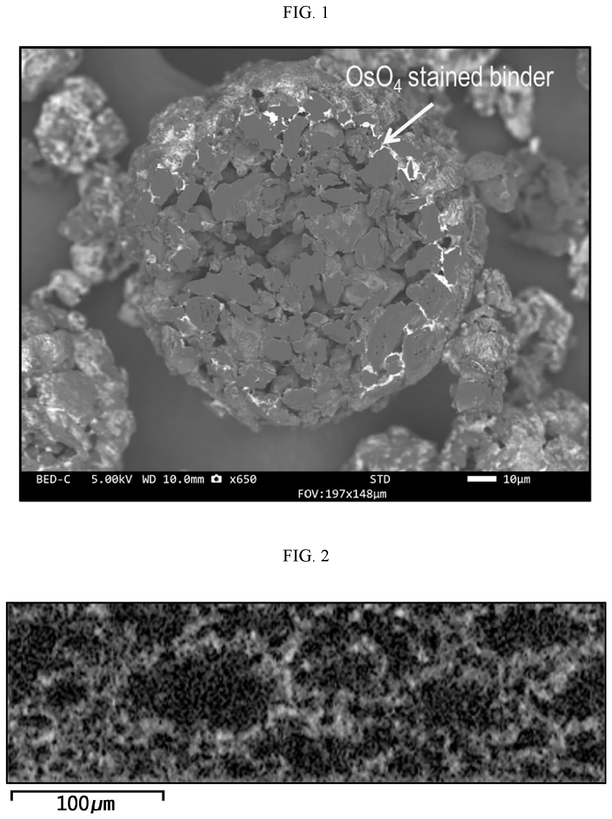

FIG. 1 is a scanning electron microscopic (SEM) image schematically showing the electrode granule particle according to an embodiment of the present disclosure. Referring to FIG. 1, it is confirmed that the electrode granule has the surface portion area having high binder content from the surface to the predetermined depth in the direction toward the particle center, and the binder distribution in the other area than the surface portion, i.e., the central portion (a core portion) surrounded by the surface portion may be lower than the surface portion.

Describing the electrode granule in more detail, the electrode granule may have the central portion including the plurality of electrode active materials; and the surface portion located at all or part of the outer side of the central portion and including the electrode binder to bind the electrode active materials. That is, in the central portion of the electrode granule, the plurality of electrode active materials may form an agglomerate by at least one of surface contact, line contact, point contact or two or more of these contacts, and in the surface portion of the electrode granule, the electrode binder may be located at all or part of the outer side of the agglomerate, and hold and bind the plurality of electrode active materials of the central portion of the electrode granule together.

According to an embodiment of the present disclosure, the central portion may further include a small amount of electrode binder to connect and hold the plurality of electrode active materials of the central portion together. However, as described above, the ratio of the amount of the electrode binder in the surface portion is preferably higher than that of the central portion.

Meanwhile, in an embodiment of the present disclosure, the electrode granule may preferably have an aspect ratio between more than 0.75 and 1.0. The aspect ratio may refer to a ratio of the short axis length to the long axis length of the electrode granule. In another embodiment of the present disclosure, an average aspect ratio of the electrode granules may have a value of from 0.5 to 1.0, preferably from 0.75 to 1.0, and in this case, the average aspect ratio may refer to a ratio of the average short axis length to the average long axis length of the electrode granule particles. In this instance, the average short axis length may refer to the average value of length in the axial direction having the shortest length of the electrode granule, and the average long axis length may refer to the average value of length in the axial direction having the longest length of the electrode granule. When the aspect ratio of the electrode granule lies in the aforementioned range, it is advantageous due to sufficient flowability suitable for the process.

Meanwhile, in an embodiment of the present disclosure, the particle size of the electrode granule may have a range between 0.1 $\mu$m and 1,000 $\mu$m on the basis of the longest diameter of the particle. In another embodiment of the present disclosure, the average particle size $D_{50}$ of the electrode granules may have a range between 0.1 $\mu$m and 1,000 $\mu$m.

<Electrode powder and its manufacturing method>

In the present disclosure, the electrode powder includes the electrode active material and the electrode binder, and optionally, may include any substance, for example, the conductive material, if necessary. The electrode powder includes the micro-fibrillated electrode binder as below, and may be configured such that the electrode material such as the electrode active material particles is bonded by the microfibers of the electrode binder.

In a specific embodiment of the present disclosure, the electrode powder may be obtained by the manufacturing method including the steps of (a) preparing a powder blend including the electrode active material, the conductive material and the binder resin; (b) kneading the powder blend into a mixture mass; and (c) grinding the mixture mass to obtain an electrode mixture powder.

First, the electrode active material and the electrode binder are mixed to obtain the homogeneous dry powder blend (a). The powder blend may further include any material, for example, the conductive material, if necessary. The mixing is not limited to a particular mixing method and may include any method for dry mixing. For example, the mixing may be performed by feeding the electrode materials into a mixer or a blender. In an embodiment of the present disclosure, the mixing may be preferably performed such that the degree of crystallinity of the binder resin in the obtained dry powder blend is 50% or less, and to achieve the degree of crystallinity, the process conditions may be controlled. For example, the mixing may be performed for 1 second to 20 minutes. The temperature of the mixture was controlled in a range between 20°C and 70°C. Additionally, the mixing may be performed in the mixing machine under the process condition of from 500 rpm to 20,000 rpm, from 5,000 rpm to 20,000 rpm or from 1000 rpm to 15,000 rpm or from 10,000 rpm to 15,000 rpm.

Subsequently, the obtained powder blend was applied to the kneading step to fibrillate the electrode binder (b). When the binder resin is fibrillated by the kneading process, the electrode active material and conductive material powder is held or connected together to form the blend mass. The fibrillation refers to breaking polymer into smaller pieces, and for example, a lot of microfibers (fibrils) are produced by the action of a mechanical shear force.

The kneading is not limited to a particular method. In a specific embodiment of the present disclosure, the kneading may be performed through a kneading machine such as, for example, a kneader. For example, the kneader may include a twin screw extruder, a single screw extruder, a batch kneader, or a continuous kneader.

In an embodiment of the present disclosure, the kneading may be controlled to the speed of 10 rpm to 100 rpm. For example, the kneading may be controlled to the speed of 20 rpm or more or 70 rpm or less within the aforementioned range. Meanwhile, in an embodiment of the present disclosure, the kneading step may be controlled to a range of shear velocity between 5/sec and 1,000/sec. In a specific embodiment of the present disclosure, the kneading may be performed for 1 minute to 30 minutes, and the shear velocity may be controlled to a range between 10/sec and 500/sec. Meanwhile, the kneading may be performed in a range between 70°C and 200°C, and specifically between 90°C and 150°C. The temperature may be a temperature inside the kneader or a temperature of the object being kneaded. Alternatively, the temperature of the kneader and the object may be controlled to the aforementioned range.

Outside of the aforementioned range, when the kneading process is performed at low temperature, binder fibrillation and agglomeration by kneading is inadequate, and a film is not easily formed during calendering, and when the kneading process is performed at too high temperature, binder fibrillation occurs rapidly and subsequently the already formed fibers may be broken by too high shear force. As described above, when the kneading process is performed with relatively low shear force at high temperature, there is no risk of over-pulverization/damage of the electrode active material or breakage of binder fibers, and the electrode powder including the microfibrillated binder resin may be obtained.

Additionally, the fibrillated binder resin has high uniformity in thickness and/or length of fibers.

Meanwhile, the binder resin may be fibrillated in the step (a) but the fibers formed in the step (a) are too thick to break down into smaller pieces enough to achieve the tensile elongation for the tensile strength required for the dry electrode. In the present disclosure, preferably microfibrillation of the binder resin is usually performed through (b).

Non-limiting examples of the binder resin suitable for the fibrillation process may include polytetrafluoroethylene (PTFE), polyvinylidene fluoride (PVDF), polyolefin or a mixture thereof, specifically, polytetrafluoroethylene (PTFE). Specifically, the polytetrafluoroethylene (PTFE) may be included in an amount of 30 wt% or more on the basis of the total weight of the binder resin. Meanwhile, in this instance, in addition to the above-described substances, the binder resin may further include polyethylene oxide (PEO) and/or polyvinylidene fluoride-co-hexafluoropropylene (PVdF-HFP).

Subsequently, the blend mass manufactured through the kneading step is ground again to obtain the electrode mixture powder. In this instance, the grinding may be performed using a known pulverizer such as a blender or a grinder but is not limited thereto. In an embodiment of the present disclosure, when considering formation into a film, the particle size of the obtained electrode mixture powder may preferably have a range between 30 $\mu$m and 180 $\mu$m.

Meanwhile, in the present disclosure, the degree of crystallinity (c) of the binder resin included in the electrode mixture powder may be 20% or less. The degree of crystallinity may be adjusted by adjusting at least one of process conditions, kneading time, kneading temperature, rotational speed (rpm) and shear velocity.

<Dry electrode>

The dry electrode according to an aspect of the present disclosure is an electrode for an electrochemical device including the current collector; and the electrode active material layer present on the current collector. The electrode active material layer may include the electrode active material and the electrode binder, and may be formed by applying pressure to the electrode granules or the electrode powder having the above-described features, or both to consolidate into a layered structure.

Hereinafter, the electrode active material layer and the current collector will be described in more detail.

<Electrode active material layer>

The electrode active material layer contains the electrode active material and the electrode binder. In the present disclosure, the electrode active material layer may be formed by applying pressure to the electrode granules or the electrode powder or both to consolidate into the layered structure. When the electrode granules are introduced into the electrode, the aspect ratio or particle size range may not maintain the initial state by the calendering process as described below. The electrode active material layer may include the electrode granules in an amount of 80 wt% or more, 90 wt% or more, 95 wt% or more or 99 wt% or more based on 100 wt% of the electrode active material layer. Meanwhile, in an embodiment, the electrode active material layer may further include an electrode active material, an electrode binder or an electrode conductive material that is not included in the electrode granules by granulation and are present in free state. Alternatively, the electrode active material layer may further include electrode granule particles outside of the aforementioned range of aspect ratio and/or particle size.

In an embodiment of the present disclosure, the electrode active material layer preferably has the porosity of from 20 vol% to 40 vol% in view of electrolyte wetting, shape stability and ionic conductivity. In an embodiment of the present disclosure, the electrode active material layer including the electrode granules may have pores provided by interstitial volume between the electrode granules, and exhibit the porous properties derived from this structure.

Meanwhile, according to an embodiment of the present disclosure, the thickness of the electrode active material layer may range, for example, from 30 $\mu$m to 300 $\mu$m, but is not limited thereto.

According to another embodiment of the present disclosure, the electrode active material layer may be a single layer including a single unit active material layer.

According to another embodiment of the present disclosure, the electrode active material layer may have a multilayer structure including two or more unit active material layers stacked. In this instance, the electrode material included in each unit active material layer, for example, the electrode active material and the electrode binder may be identical or different for each layer, but is not limited thereto. Additionally, if necessary, each layer may include the electrode conductive material, and in this instance, the electrode conductive material of each layer may be identical or different.

Additionally, in an embodiment of the present disclosure, the electrode active material layer has a uniform binder distribution in the thickness direction. In a specific embodiment, the electrode active material layer may have a difference of 10 wt% or less between the binder content (wt%) in the top 100 wt% and the binder content (wt%) in the bottom 100 wt%, in the upper part and the lower part on the basis of 50% from the current collector in the thickness of the electrode active material layer. Additionally, on the basis of the thickness of the electrode active material layer, the difference between the binder content in the area up to 15% of the thickness in the direction from the current collector to the electrode surface portion and the binder content in the area up to 15% in the direction from the surface portion of the electrode active material layer to the current collector may be 10 wt% or less.

The binder distribution may result from the fact the electrode active material layer according to the present disclosure is formed by the compaction of the electrode granules and/or the electrode powder. As described below, the electrode manufacturing method of the present disclosure is characterized by preparing the electrode granule particles or the electrode powder including the electrode material, and applying them to the current collector or a release paper to a predetermined thickness and applying pressure so that they are packed closer together. In the case of the electrode manufacturing method involving the slurry preparation, the binder distribution is focused on the surface portion of the electrode by the binder migration induced by the evaporation of the solvent during the drying of the slurry. However, because the present disclosure uses the method of compacting the electrode granule particles and/or the electrode powder in dry state without using solvents so that they are packed closer together, and binder migration does not occur. Accordingly, the binder distribution is uniform in each unit layer in the thickness direction.

\<Electrode material\>

According to an embodiment of the present disclosure, the electrode active material layer may include the electrode active material and the electrode binder, and if necessary, may further include the electrode conductive material. For example, the mix ratio of the electrode active material, the electrode conductive material and the electrode binder in the electrode active material layer may be such that the electrode active material: the electrode conductive material: the electrode binder may be included at a weight ratio of 80 parts by weight to 99 parts by weight: 0.5 parts by weight to 10 parts by weight : 0.5 parts by weight to 10 parts by weight, and specifically, 90 parts by weight to 99 parts by weight : 0.5 parts by weight to 5 parts by weight : 0.5 parts by weight to 10 parts by weight.

The electrode may be positive or negative.

When the electrode is positive, the electrode active material, to be exact, the positive electrode active material may include any type of lithium transition metal oxide, lithium metal iron phosphate or metal oxide, for example, layered compounds such as lithium cobalt oxide ($LiCoO_2$), lithium nickel oxide ($LiNiO_2$) or compounds with one or more transition metal substitution; lithium manganese oxide of Formula $Li_{i+x}Mn_{2-x}O_4$ (where x is from 0 to 0.33), $LiMnO_3$, $LiMn_2O_3$, $LiMnO_2$; lithium copper oxide ($Li_2CuO_2$); vanadium oxide such as $LiV_3O_8$, $LiV_3O_4$, $V_2O_5$, $Cu_2V_2O_7$; Ni site lithium nickel oxide represented by Formula $LiNi_{1-x}M_xO_2$ (where M = Co, Mn, Al, Cu, Fe, Mg, B or Ga, x = 0.01 to 0.3); lithium manganese composite oxide represented by Formula $LiMn_{2-x}M_xO_2$ (where M = Co, Ni, Fe, Cr, Zn or Ta, x = 0.01 to 0.1) or $Li_2Mn_3MO_8$ (where M = Fe, Co, Ni, Cu or Zn); $Li_{1+x}(Ni_aCo_bMn_cAl_d)_{1-x}O_2$ with partial substitution of aluminum ion for Li in the Formula (x = 0 to 0.03, a = 0.3 to 0.95, b = 0.01 to 0.35, c = 0.01 to 0.5, d = 0.001 to 0.03, a+b+c+d=1); lithium metal phosphate $LiM_PO_4$ (where M = Fe, Co, Ni, or Mn), disulfide compounds; $Fe_2(MoO_4)_3$, but is not limited thereto.

When the electrode is negative, the negative electrode active material may include, for example, graphite-based carbon materials such as nongraphitizing carbon, natural graphite or artificial graphite; metal composite oxide such as $Li_xFe_2O_3$($0 \leq x \leq 1$), $Li_xWO_2$($0 \leq x \leq 1$), $Sn_xMe_{1-x}Me'_yO_z$ (Me: Mn, Fe, Pb, Ge; Me': Al, B, P, Si, Groups 1, 2 and 3 elements in the periodic table, halogen; $0 < x \leq l$; $1 \leq y \leq 3$; $1 \leq z \leq 8$); lithium metals; lithium alloys; silicon; silicon-based alloys; tin; tin-based alloys; silicon-based materials such as $SiO_x$($O < x \leq 2$), SiO, SiO/C, $SiO_2$; tin-based materials such as SnO, $SnO_2$; metal oxide such as PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymer such as polyacetylene; Li-Co-Ni based materials, but is not limited thereto. Meanwhile, to exhibit the above-described Ohmic resistance change pattern, the electrode active material may include at least one of graphite-based carbon materials, silicon, silicon-based alloys, silicon-based materials, tin, tin-based alloys or tin-based materials having high volume swelling ratio during charging/discharging.

Meanwhile, in an embodiment of the present disclosure, the electrode active material may include two or more different electrode active materials. Specifically, the electrode granule particles may include two or more different electrode active materials in a particle. The electrode active material may include the above-described materials, but is not limited thereto. For example, the electrode granules may include artificial graphite and natural graphite as the electrode active material, and the artificial graphite and the natural graphite may be mixed at a predetermined ratio.

The electrode conductive material is not limited to a particular type and may include any material having conductive properties while not causing any chemical change in the corresponding battery, and may include, for example, graphite such as natural graphite or artificial graphite; carbon black such as carbon black, acetylene black, Ketjen black, channel black, furnace black, lamp black or thermal black; conductive fibers such as carbon fibers or metal fibers; fluorocarbon; metal powder such as aluminum or nickel powder; conductive whiskers such as zinc oxide or potassium titanate; conductive metal oxide such as titanium oxide; and conductive materials such as polyphenylene derivatives, but specifically, for uniform mixing of the electrode conductive material and improved conductivity, may include at least one selected from the group consisting of activated carbon, graphite, carbon black and carbon nanotubes, and more specifically, activated carbon. Meanwhile, in an embodiment of the present disclosure, the electrode granule particles may include two or more different conductive materials in a particle. For example, the electrode granules may include a mixture of carbon black and carbon nanotubes at a predetermined ratio as the conductive material.

In the present disclosure, the electrode binder may include, without limitation, any binder material for electrochemical devices, and may include, for example, diene-based polymer, acrylate-based polymer, olefin-based polymer, fluorine-based polymer, styrene-based polymer or two or more of them.

Examples of the diene-based polymer may include polymer including a monomer unit derived from conjugated diene such as butadiene and isoprene and its hydrogenated form. A ratio of the conjugated diene-derived monomer unit in the diene-based polymer may be usually 40 wt% or more, preferably 50 wt% or more, and more preferably 60 wt% or more.

Specifically, the diene-based polymer may include a conjugated diene homopolymer such as polybutadiene or polyisoprene; an aromatic vinyl-conjugated diene copolymer such as styrene-butadiene copolymer (SBR) with carboxyl modification; a vinyl cyanide-conjugated diene copolymer such as acrylonitrile-butadiene copolymer (NBR); hydrogenated SBR, hydrogenated NBR.

The styrene-based polymer may include polymer having a styrene monomer-derived repeating unit, for example, a styrene homopolymer (polystyrene) or a styrene copolymer. Examples of the styrene copolymer may include block copolymers such as a styrene-ethylene-butadiene copolymer, a styrene-butadiene-propylene copolymer, a styreneisoprene copolymer, a styrene acrylate-n-butyl itaconate-methyl methacrylate-acrylonitrile copolymer, a styrene-butadiene block copolymer, a styrene-butadiene-styrene·block copolymer, a styrene-ethylene-butylene-styrene·block copolymer, a styrene-isoprene·block copolymer, or a styrene-ethylene-propylene-styrene-block copolymer.

Example of the acrylate-based polymer may include polymer including a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more. Specific example of the acrylate-based polymer may include cross-linked acrylate-based polymer such as an acrylic acid 2-ethylhexyl-methacrylic acid-acrylonitrile-ethyleneglycoldimethacrylate copolymer, an acrylic acid 2-ethylhexyl-methacrylic acid-methacrylonitrile-diethyleneglycoldimethacrylate copolymer, an acrylic acid 2-ethylhexyl-styrene-methacrylic acid-ethyleneglycoldimethacrylate copolymer, a butyl acrylate-acrylonitrile-diethyleneglycoldimethacrylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, or methacrylic acid. Besides, the copolymer of ethylene and (meth)acrylic acid such as an ethylene-acrylic acid copolymer, an ethylene-methacrylic acid copolymer may be used as a dispersible binder.

The olefin-based polymer may include at least one of polyethylene, polypropylene or polybutylene. In an embodiment of the present disclosure, the electrode powder including the fibrillated binder may include the polyethylene polymer.

The fluorine-based polymer may include polyvinylidene fluoride (PVdF), polytetrafluoroethylene (PTFE) and a polyvinylidene fluoride-based copolymer such as PVDF-HFP, specifically polytetrafluoroethylene (PTFE). In an embodiment of the present disclosure, the electrode powder including the fibrillated binder may include polytetrafluoroethylene.

Meanwhile, in an embodiment of the present disclosure, the binder resin may include two or more types of different materials. Specifically, the electrode granule particles may include two or more different binder materials in a particle. For example, the electrode granules may include a mixture of styrene-butadiene rubber (SBR) and acrylate-based polymer at a predetermined ratio as the binder material.

In an embodiment of the present disclosure, when the electrode is a fibrillated electrode powder type electrode, the electrode binder may include a fluorine-based copolymer. In a specific embodiment, the electrode may include the fluorine-based copolymer, for example, PTFE, and more preferably, the PTFE may be included in an amount of 60 wt% or more of PTFE based on the total weight of the binder. Meanwhile, the electrode binder may further include a fluorine-based copolymer other than PTFE, a styrene-based copolymer, a polyolefin-based copolymer, polyethylene oxide (PEO), or an acrylate-based copolymer.

Meanwhile, in an embodiment of the present disclosure, in the case of the electrode in which granules are packed closer together, the electrode binder may include at least one of diene-based polymer or styrene-based polymer and its amount may be 60 wt% or more based on the total weight of the binder. In a specific embodiment, the electrode binder may include a styrene-butadiene block copolymer in an amount of 60 wt% or more based on the total weight of the binder. Meanwhile, the electrode binder may further include a fluorine-based copolymer, a polyolefin-based copolymer, polyethylene oxide (PEO), or an acrylate-based copolymer.

Meanwhile, according to an embodiment of the present disclosure, when the electrode binder includes an electrode binder having double bonds, for example, when the electrode is a negative electrode, the negative electrode active material layer may have a first Quantified Binder Ratio (QBR) of 2.0 or less.

The first QBR is defined by the following Equation.

$$\text{(Equation 2) First QBR} = \text{ABs/ABf}$$

In the above Equation, ABs denotes the average number of double bonds in the negative electrode active material layer surface area within 15% of the total thickness of the negative electrode active material layer from the outermost surface of the negative electrode active material layer, and ABf denotes the average number of double bonds in the negative electrode active material layer bottom area within 15% of the total thickness of the negative electrode active material layer from the negative electrode active material layer interface in contact with the current collector.

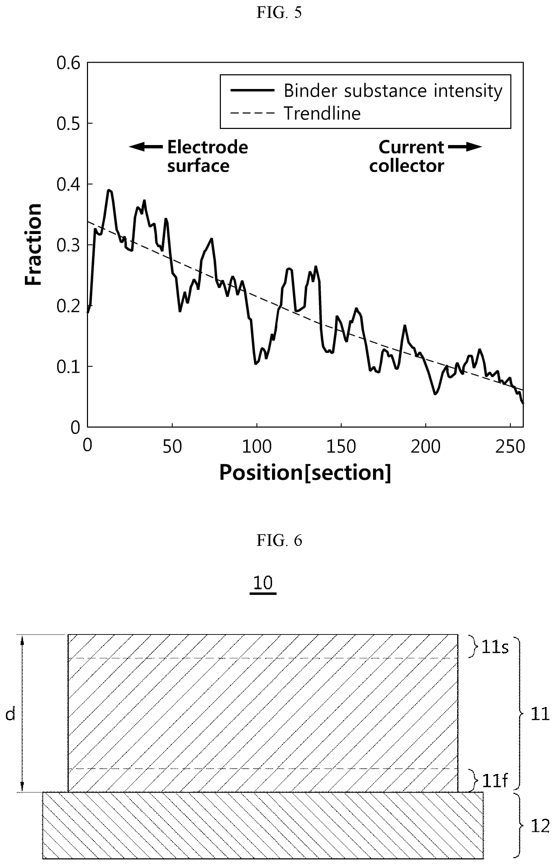

FIG. 6 is a schematic diagram of the electrode according to an embodiment of the present disclosure. Referring to FIG. 6, the electrode 10 includes the electrode current collector 12; and the electrode active material layer 11 located on the electrode current collector 12, and including the electrode active material and the fluorine-containing electrode binder.

On the basis of the total thickness (d), the electrode active material layer 11 has the electrode active material layer surface area 11s within 15% of the total thickness (d) of the electrode active material layer from the outermost surface of the electrode active material layer, and the electrode active material layer bottom area 11f within 15% of the total thickness (d) of the electrode active material layer from the electrode active material layer interface in contact with the electrode current collector.

In the above Equation, in the first QBR, ABs denotes the average number of double bonds of the binder in the electrode active material layer surface area 11s, and ABf denotes the average number of double bonds of the binder in the electrode active material layer bottom area 11f.

In this instance, the first QBR may be calculated by the following method.

First, a target electrode for determination of the first QBR is selected, and a cross section of the selected negative electrode is prepared using Ar ion milling. Subsequently, EDS mapping of the constituent elements in the negative electrode active material layer of the electrode cross section is performed using an Energy Dispersive X-ray Spectroscopy (EDS) detector of a Scanning Electron Microscope (SEM).

A line profile is extracted from the EDS mapping results in the thickness direction of the negative electrode active material layer, the average number of double bonds Bs of the binder in the electrode layer surface area and the average number of double bonds Bf of the binder in the electrode layer bottom area are extracted from the extracted line profile results, and the first QBR is calculated using the following Equation.

$$\text{First QBR} = \text{ABs/ABf}$$

In this instance, the electrode active material layer surface area is an area within 15% of the total thickness of the electrode active material layer from the outermost surface in the thickness direction of the electrode active material layer, and the electrode active material layer bottom area is an area within 15% of the total thickness of the electrode active material layer from the electrode active material layer interface in contact with the current collector.

The first QBR value is a value indicating how much uniformly the electrode binder is distributed in the electrode active material layer in the thickness direction through the ratio of the amount of the electrode binder included in the surface area to the amount of the electrode binder included in the bottom area of the electrode active material layer. In this instance, the amount of the electrode binder may be inferred through the double bond component included in the electrode binder used.

The first QBR value may be 2.0 or less, or from 0.6 to 2.0, or from 0.9 to 2.0, or from 0.6 to 1.4, or from 0.9 to 1.4, or from 0.9 to 1.1.

When the first QBR lies in the aforementioned range, it may be possible to prevent a larger amount of the electrode binder included in the surface area than the amount of the electrode binder included in the bottom area of the electrode active material layer due to the binder migration to the electrode surface, leading to uniform binder distribution in the electrode active material layer in the thickness direction, thereby improving the adhesion strength between the current collector and the electrode active material layer, and increasing the conductivity on the electrode active material layer surface and the charging/discharging rate as well.

Meanwhile, in an embodiment of the present disclosure, the electrode may include the electrode binder having double bonds, for example, a styrene-butadiene copolymer as the binder material, and in this instance, a second QBR value may be 2.0 or less.

According to an embodiment of the present disclosure, when the electrode includes the fluorine-based binder as the binder material, the electrode active material layer may have the second QBR of 1.1 or less, and the second QBR may be defined by the following Equation:

$$\text{(Equation 3) Second QBR} = \text{CBs/CBf}$$

In the above Equation, CBs denotes the average fluorine content of the electrode binder in the electrode layer surface area within 15% of the total thickness of the electrode active material layer from the outermost surface of the electrode active material layer, and CBf denotes the average fluorine content of the electrode binder in the electrode active material layer bottom area within 15% of the total thickness of the electrode active material layer from the electrode active material layer interface in contact with the electrode current collector.

The second QBR value may be 1.1 or less, and according to an embodiment of the present disclosure, the first QBR value may be 0.95 or more, 0.97 or more, 1.03 or less, 1.05 or less, and may range from 0.95 to 1.05.

When the second QBR value lies in the range of 1.1 or less, it may be possible to prevent a larger amount of the fluorine-containing electrode binder included in the surface area than the amount of the fluorine-containing electrode binder included in the bottom area of the electrode active material layer due to the migration of the fluorine-containing electrode binder to the electrode surface, leading to uniform binder distribution in the electrode active material layer in the thickness direction, thereby improving the adhesion strength between the current collector and the electrode active material layer, and increasing the conductivity on the electrode active material layer surface and the charging/discharging rate as well.

Meanwhile, in an embodiment of the present disclosure, the electrode may include the fluorine-based binder resin, and in this instance, the second QBR value may be 1.1 or less.

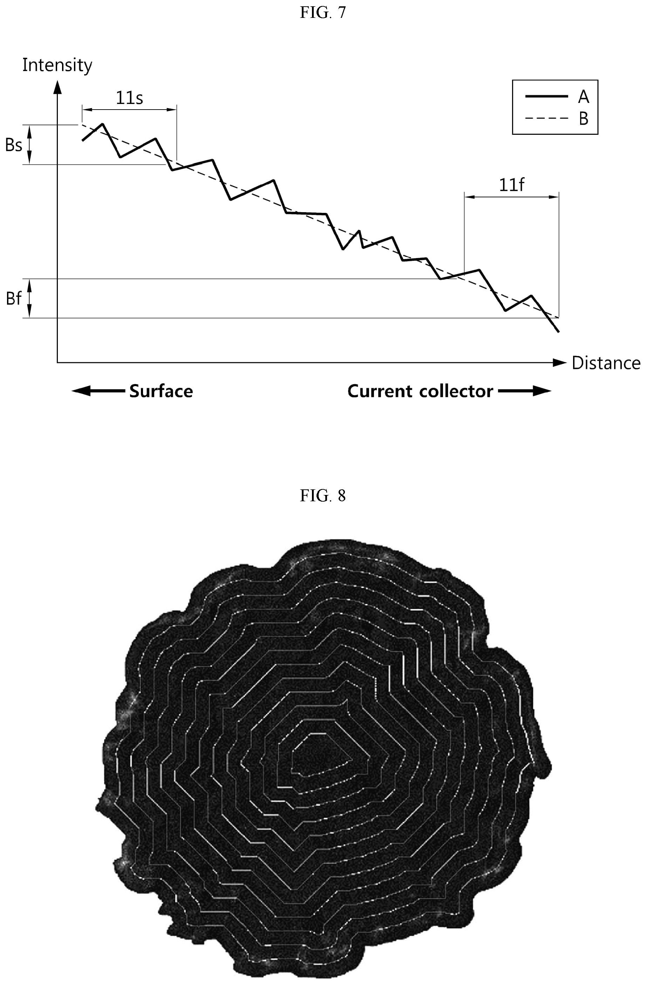

FIG. 7 is a schematic diagram showing the calculation of the first or second QBR value of the electrode active material layer. Referring to FIG. 7, the X axis indicates the thickness of the electrode active material layer, i.e., a distance from the surface to the current collector, and the Y axis indicates the intensity of binder substance, the fluorine intensity or the double bond intensity as measured. The line A indicates the double bond intensity of the binder having double bonds extracted by EDS mapping of the binder in the electrode active material layer of the electrode cross section, and the line B is a trendline showing a trend of the line A by locally weighted scatterplot smoothing (LOWESS). In FIG. 7, Bs denotes the binder intensity of the electrode surface, and Bf denotes the binder intensity of the lower part of the electrode (in contact with the current collector).

Meanwhile, in the present disclosure, the electrode binder may include diene-based polymer and cross-linked acrylate-based polymer since it is possible to obtain the active material layer having good binding to the current collector or good surface smoothness and manufacture the electrode for the electrochemical device with high capacitance and low internal resistance.

The electrode binder is not limited to a particular shape, but a particulate shape is preferred since the binding performance is good and it is possible to suppress the decline in capacitance of the manufactured electrode or degradation over the repeated charges/discharges. The particulate electrode binder may include, for example, dispersible binder particles dispersed in water like latex, or powder obtained by drying the dispersion. The particulate binder may be preferably included in the negative electrode.

Meanwhile, in some cases, the electrode active material layer may further include fillers to suppress the expansion of the electrode active material layer, and the fillers are not limited to a particular type and include any fibrous material that does not cause any chemical change in the corresponding battery, for example, olefin-based polymer such as polyethylene or polypropylene; and fibrous materials such as glass fibers or carbon fibers.

The current collector is not limited to a particular type and may include those having high conductivity without causing any chemical change in the battery. For example, the current collector may include, for example, stainless steel, aluminum, nickel, titanium, sintered carbon, copper or aluminum or stainless steel treated with carbon, nickel, titanium or silver on the surface. The current collector may have microtexture on the surface to increase the adhesion strength of the electrode active material, and may come in various forms, for example, a film, a sheet, a foil, a net, a porous body, a foam or a nonwoven.

Meanwhile, in an embodiment of the present disclosure, all or part of the current collector may be coated with a conductive primer.

The primer layer may include a binder for the primer layer (hereinafter, second binder) and a conductive material for the primer layer (hereinafter, second conductive material), and the sum of amounts of the second binder and the second conductive material in the primer layer may be 90 wt% or more.

The electrode according to an embodiment of the present disclosure includes the electrode active material layer including the electrode granules, and in this instance, when the primer layer includes the second binder and the second conductive material such that the sum of amounts of the second binder and the second conductive material is 90 wt% or more, it may be possible to ensure time-dependent stability of the primer layer, thereby achieving good properties such as adhesion strength and life characteristics, but the present disclosure is not limited thereto.

According to an embodiment of the present disclosure, the primer layer includes the second binder and the second conductive material, and may further include a dispersant.

According to another embodiment of the present disclosure, the primer layer includes the second binder and the second conductive material, but may not substantially include the dispersant.

According to an embodiment of the present disclosure, the second binder may include, without limitation, any type of binder commonly used in the primer layer.

According to another embodiment of the present disclosure, the second binder may preferably include polymer that ensures the time-dependent stability of the primer layer. Specifically, the second binder may have the glass transition temperature Tg of 45°C or less.

According to another embodiment of the present disclosure, the second binder may include, for example, styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more of them. Specifically, the binder may include styrene butadiene rubber (SBR), nitrile butadiene rubber (NBR), polymethylmethacrylate, polyethylhexylacrylate, polybutylacrylate or two or more of them.

According to another embodiment of the present disclosure, the second binder may include one selected from the above-described binder types having the above-described glass transition temperature or a mixture thereof.

According to another embodiment of the present disclosure, the second binder may include styrene butadiene rubber (SBR) having the glass transition temperature Tg of from -40°C to 45°C, nitrile butadiene rubber (NBR) having the glass transition temperature Tg of from -40°C to 45°C or a mixture thereof.

According to an embodiment of the present disclosure, the second conductive material may have the specific surface area of from 30 $m^2/g$ to 1,400 $m^2/g$, and a spherical shape. In this instance, the primary particle size of the conductive material having the spherical shape may range, for example, from 10 nm to 100 nm, and specifically from 15 nm to 70 nm, but is not limited thereto.

According to another embodiment of the present disclosure, the second conductive material may have a tubular (tube type) shape having the specific surface area of from 10 $m^2/g$ to 400 $m^2/g$. In this instance, the conductive material having the tubular shape may have a diameter of cross section in a direction perpendicular to the length direction, ranging from 0.1 to 3 nm, and specifically from 0.3 to 1.5 nm, but is not limited thereto.

The second conductive material is not limited to a particular type and may include any material having conductive properties without causing any chemical change in the corresponding battery, for example, graphite such as natural graphite or artificial graphite; a carbon black-based carbon compounds such as carbon black, acetylene black, Ketjen black, channel black, furnace black, lamp black or thermal black; conductive fibers such as carbon fibers or metal fibers; fluorocarbon; metal powder such as aluminum or nickel powder; conductive whiskers such as zinc oxide or potassium titanate; conductive metal oxide such as titanium oxide; conductive materials such as polyphenylene derivatives, but specifically, for uniform mixing of the conductive material and improved conductivity, the conductive material may include activated carbon, graphite, carbon black, carbon nanotubes or a mixture thereof, and more specifically, activated carbon.

According to an embodiment of the present disclosure, the primer layer may include the above-described composition, and its thickness may range from 300 nm to 1.5 $\mu$m, and specifically from 700 nm to 1.3 $\mu$m, but is not limited thereto.

<Method for manufacturing electrode granule>

According to an embodiment of the present disclosure, the electrode granule may be manufactured by a method including the steps of mixing the electrode active material and the electrode binder with a dispersion medium to prepare a slurry; and spray drying the slurry.

First, the electrode active material and the electrode binder, and optionally the conductive material or an additive are dispersed or dissolved in the dispersion medium (the solvent for the negative electrode binder) to obtain the slurry in which the electrode conductive material and/or the additive is dispersed or dissolved together with the electrode active material and the electrode binder.

The dispersion medium used to obtain the slurry is, the most suitably, water, but an organic solvent may be used. The organic solvent may include, for example, alkylalcohols such as methylalcohol, ethylalcohol or propylalcohol; alkylketones such as acetone or methylethylketone; ethers such as tetrahydrofuran, dioxane or diglyme; amides such as diethylformamide, dimethylacetoamide, N-methyl-2-pyrrolidone (hereinafter referred to as NMP) or dimethylimidazolidinone; sulfur-based solvents such as dimethylsulfoxide or sulfolane, but alcohols are preferred. When the organic solvent having lower boiling point than water is used together, the drying rate may increase during the fluid bed granulation. Additionally, since the dispersion or dissolution of the negative electrode binder may change, the viscosity or flowability of the slurry may be adjusted according to the amount or type of the dispersion medium, thereby improving the production efficiency.

The dispersion medium used to prepare the slurry may be present in such an amount that the solid concentration of the slurry is usually in a range between 1 wt% and 50 wt%, or 5 wt% and 50 wt%, or 10 wt% and 30 wt%.

The method or order of dispersing or dissolving the electrode active material and the electrode binder in the dispersion medium is not particularly limited, and for example, the electrode active material and the electrode binder may be added to the dispersion medium and mixed up, or the electrode binder may be dissolved or dispersed in the dispersion medium, then the electrode active material may be added and mixed all together. When the slurry includes the conductive material and/or the additive, when feeding the electrode active material, these components may be fed. The mixing means may include, for example, a ball mill, a sand mill, a bead mill, a pigment dispersion machine, a stone mill, an ultrasonic dispersion machine, a homogenizer, or a planetary mixer. The mixing may be, for example, performed in a range between room temperature and 80°C for 10 minutes to a few hours.

Subsequently, the slurry is spray dried. The spray drying method is a method that dries the slurry while spraying the slurry in hot air. A spraying method of equipment used in the spray drying method may include a rotary disc method or a pressure nozzle method. The rotary disc method is a method which feeds the composition into almost the center of the disc that rotates at high speed, urges the composition to the periphery of the disc by the centrifugal force of the disc, to create mist and dries it. The rotational speed of the disc relies on the size of the disc, but is usually from 5,000 rpm to 35,000 rpm, and preferably from 15,000 rpm to 30,000 rpm. Meanwhile, the pressure nozzle method is a method which sprays the composition through the thin nozzle together with air or a liquid such as a high pressure fluid to convert into mist and dries it.

In an embodiment of the present disclosure, the temperature of the hot air may be controlled to 80°C to 250°C on the basis of the reactor inlet temperature (input) to form the electrode granule structure having a high amount of electrode binder on the surface. In the present disclosure, the temperature of the hot air may be preferably controlled to 175°C to 220°C, and more preferably 180°C to 220°C, taking into account the binder content gradient and the aspect ratio. In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, a method of cocurrent flow of sprayed droplets and hot air, fall by gravity and countercurrent contact. Meanwhile, in an embodiment of the present disclosure, in the spray drying, the outlet temperature (the temperature of hot air released from the reactor) of the reactor may be controlled to 90°C to 130°C.

When the outlet temperature and/or a difference $\Delta T$ between inlet temperature and outlet temperature is low, drying is not properly performed, so particles containing a large amount of remaining solvent may be formed, thereby failing to form spherical particles of uniform shape, resulting in agglomeration of electrode granules or amorphous granules. Meanwhile, when the inlet temperature is too high and $\Delta T$ is large, granulation fails due to overdrying and particles having very small particle size $D_{50}$ and low aspect ratio may be produced. Accordingly, to control the particle size to the proper level along with high aspect ratio and less binder agglomeration, it is necessary to control the inlet temperature and outlet temperature within the proper range.

Additionally, heating may be optionally performed to cure the surface of the result obtained by the spray drying, i.e., the electrode granules, and in this instance, the thermal treatment temperature may usually range from 80°C to 300°C.

<Method for manufacturing electrode>

According to an embodiment of the present disclosure, the method for manufacturing the electrode may include the steps of: applying the electrode material including the above-described electrode granules or the electrode powder or both to the current collector; and applying pressure to the electrode material to form the electrode active material layer.

Any one electrode material prepared by the above-described method is applied to the current collector. In this instance, the current collector may have the primer layer including the second conductive material and the second binder on all or part of at least one surface as described above.

According to an embodiment of the present disclosure, the prepared electrode granules may be fed into a roll-type press forming machine by a feeding equipment, for example, a screw feeder to form the active material layer, and in this instance, at the same time with the supply of the electrode granules, the current collector may be transferred to the rolls of the press forming machine to directly stack the active material layer on the current collector. Alternatively, the electrode granules may be applied on the current collector and evenly spread using a blade to adjust the thickness, and then shaped using the press machine to form the electrode active material layer.

In these methods, the roll press forming temperature may usually range from 0°C to 200°C, and may be preferably higher than the melting point or the glass transition temperature of the electrode binder, and more preferably, may be higher by at least 20°C. In the roll press forming, the forming speed may usually range from 0.1 m/min to 20 m/min, or from 1 m/min to 10 m/min. Additionally, the press nip pressure between rolls may usually range from 0.2 kN/cm to 30 kN/cm, or from 0.5 kN/cm to 10 kN/cm.

To reduce the thickness deviation of the formed electrode and increase the density of the electrode active material layer, thereby contributing to high capacity, pressing may be additionally performed if necessary. The post-pressing method generally uses a press process by rolls. In the roll press process, two cylindrical rolls are vertically arranged in parallel at a small interval, and the electrode is placed between the rolls and pressed by rotating the rolls in the opposite directions. The rolls may adjust the heating or cooling temperature.

Alternatively, the manufactured electrode material may be calendered to form a dry electrode film and subsequently, the dry electrode film and the current collector may be laminated to manufacture the dry electrode.

The calendering involves forming the electrode material into a film shape, for example, a film having the average thickness of from 50 $\mu$m to 300 $\mu$m. In an embodiment of the present disclosure, the calendering may be performed using a calendering machine including a roll press section with two rollers arranged facing each other. The calendering machine may include at least one roll press section. For example, a plurality of roll press sections may be continuously arranged to carry out multi-stage compaction of the electrode mixture powder. Meanwhile, the temperature of each of at least one roller of the calendering machine may be independently controlled to a range between 50°C and 200°C. Along with this or independently of this, the rotational speed ratio of the two rollers of the at least one roll press section may be controlled to a range between 1:1 ratio and 1:3 ratio. After the completion of the calendering step, the dry electrode film that acts as an electrode mixture may be manufactured. The dry electrode film may be referred to as a free standing film or a self-supporting film. The dry electrode film may have sufficient mechanical strength to be used in the process of manufacturing an energy storage system without any external support element such as the current collector, a support web or any other structure. Alternatively, the dry electrode film combined with the support such as the current collector may be used to manufacture the battery. Meanwhile, in an embodiment of the present disclosure, the obtained dry electrode film may have the degree of crystallinity (d) of the binder resin of 10% or less. When the degree of crystallinity of the obtained dry electrode film is more than 10%, the degree of crystallinity may be adjusted by adjusting the gap between the two rollers of the roll press section or controlling the speed ratio. For example, the degree of fibrillation of the binder may be increased by reducing the gap and/or increasing the speed ratio.

According to another embodiment of the present disclosure, there are provided the secondary battery including the battery case (a cylindrical case, a prismatic case, a pouch, etc.) accommodating the electrode assembly including the positive electrode, the negative electrode and the insulation membrane, and an energy storage system including the secondary battery as a unit cell. In this instance, at least one of the positive electrode or the negative electrode may be the above-described electrode. For example, the negative electrode may be a dry electrode. Meanwhile, the battery may further include the lithiumcontaining nonaqueous electrolyte.

When the electrode assembly includes a separator, the separator may include any porous polymer film commonly used as separators, for example, porous polymer films of polyolefin-based polymer such as ethylene homopolymer, propylene homopolymer, ethylene/butene copolymer, ethylene/hexene copolymer and ethylene/methacrylate copolymer as used singly or in stack. Additionally, an insulation thin film having high ion permeability and mechanical strength may be used. The separator may include a safety reinforced separator (SRS) having a thin coating of ceramic material on the separator surface. Besides, the separator may include commonly used porous nonwoven fabrics, for example, nonwoven fabrics of high melting point glass fibers or polyethyleneterephthalate fibers, but is not limited thereto.

Alternatively, when the insulation membrane is a solid electrolyte membrane, the solid electrolyte membrane may include a solid electrolyte material, and the solid electrolyte material may include at least one of an oxide-based solid electrolyte, a sulfide-based solid electrolyte and a polymer-based solid electrolyte. Additionally, when the lithium ion secondary battery is an all-solid-state battery, the dry electrode of the present disclosure may further include the above-described solid electrolyte material.

The electrolyte solution includes a lithium salt as an electrolyte and an organic solvent to dissolve it.

The lithium salt may include, without limitation, those commonly used in electrolyte solutions for secondary batteries, and for example, an anion of the lithium salt may include at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The organic solvent included in the electrolyte solution may include any commonly used organic solvent without limitation, and typically may include at least one selected from the group consisting of propylene carbonate, ethylene carbonate, diethylcarbonate, dimethylcarbonate, ethylmethylcarbonate, methylpropylcarbonate, dipropylcarbonate, dimethylsulfoxide, acetonitrile, dimethoxyethane, diethoxyethane, vinylenecarbonate, sulfolane, gamma-butyrolactone, propylene sulfite and tetrahydrofuran.

In particular, among these carbonate-based organic solvents, cyclic carbonate such as ethylenecarbonate and propylenecarbonate is a high viscosity organic solvent and has a high dielectric constant, so it dissolves the lithium salt in the electrolyte well, and more preferably, when the cyclic carbonate is mixed with low viscosity and low dielectric constant linear carbonate such as dimethylcarbonate and diethylcarbonate at an optimal ratio, the electrolyte solution having high electrical conductivity may be prepared.

Optionally, the electrolyte solution stored according to the present disclosure may further include an additive such as an anti-overvoltage agent included in the commonly used electrolyte solutions.

The lithium ion secondary battery according to an embodiment of the present disclosure may be completed by placing the positive electrode and the negative electrode with the separator interposed between them to form the electrode assembly, putting the electrode assembly in, for example, a pouch, a cylindrical battery case or a prismatic battery case, and injecting the electrolyte. Alternatively, the lithium ion secondary battery may be completed by stacking the electrode assembly and filling it with the electrolyte solution, placing the obtained result in the battery case, and sealing the battery case.

Meanwhile, in the present disclosure, the detailed structure of the lithium ion secondary battery and the energy storage system is well known, and its description is omitted.

In the present disclosure, the above-described embodiments may be independently implemented for each embodiment. Alternatively, the above-described embodiments may be implemented in a combination of two or more embodiments.

Hereinafter, examples will be particularly described to describe the present disclosure in detail. However, the examples according to the present disclosure may be modified in many other forms, and the scope of the present disclosure should not be interpreted as being limited to the following examples. The examples of the present disclosure are provided to describe the present disclosure fully and thoroughly to persons having ordinary skill in the technical field pertaining to the present disclosure.

[Example 1]

1. Negative electrode

(1) Preparation of current collector having primer layer

30 parts by weight of carbon black (specific surface area: 30 $m^2/g$, particle size: (70 nm)) as a second conductive material, 69 parts by weight of styrene-butadiene rubber (SBR)($T_g$: -15°C) as a second binder, and 1 part by weight of carboxymethyl cellulose (CMC) as a dispersant were mixed in water as a dispersion medium to prepare a primer layer slurry. In this instance, a ratio of amounts of the conductive material, the binder and the dispersant in the slurry was equal to a ratio of amounts of the conductive material, the binder and the dispersant in the primer layer formed later. The percent of solids in the primer layer slurry was 7 wt%.

The prepared primer layer slurry was coated on one surface of a copper current collector (thickness: 10 $\mu$m), and dried at 130°C to form the primer layer on the front surface of the copper current collector.

(2) Preparation of electrode granule for negative electrode active material layer

1.91 parts by weight of natural graphite having the sphericity of 0.95 and 76.5 parts by weight of artificial graphite having the average sphericity of 0.9 as a negative electrode active material, carbon black (SuperC65) as a negative electrode conductive material, carboxymethyl cellulose (daicel2200, aqueous solution type, solid concentration 1.5 wt%) as a negative electrode dispersant, and modified styrene butadiene copolymer (Grade Name AX-B119) as a negative electrode binder were mixed with water as a dispersion medium at a weight ratio of 95.6:1.0:1.1:2.3 through a homogenizer to prepare a slurry with viscosity of about 1000 cPs level. In this instance, the solid content in the slurry was 30 wt%. In the weight ratio, carboxymethyl cellulose was calculated on the solid content basis.

The prepared slurry was fed into a spray dryer together with hot air in the pressure range condition of -40 $mmH_2O$ to dry it. In this instance, the condition of the spray dryer was controlled to the inlet temperature of 180°C, the outlet temperature of 90°C, and the rotational speed of 18,000 rpm. The obtained electrode granules were sieved using an industrial sieve to remove large particles of 150 $\mu$m or more, and small particles of less than 40 $\mu$m was separated again. The separated small particles were mixed with the electrode granules in which only the large particles were removed, to finally prepare electrode granules for the negative electrode including a larger amount of small particles than the conventional electrode granules. The electrode granules had the central portion including the plurality of negative electrode active materials and the negative electrode conductive material and the surface portion located on the outer side of the central portion and including the negative electrode binder binding the negative electrode active material to the negative electrode conductive material. The average particle size $D_{50}$ of the obtained electrode granules was 66.5 $\mu$m, and the aspect ratio was 0.96. FIG. 8 is a cross-sectional view of the electrode granule particle manufactured in Example 1 by electron probe micro analysis (EPMA) processing as described below. The closed curves indicated in the image are a representation of a connection of points having the same distance from the surface.

(3) Manufacture of negative electrode

The as-prepared electrode granules were evenly coated on one surface of the current collector having the primer layer in an amount of 400 mg per 25cm$^2$ of the current collector using a thickness adjustment bar, and pressed by a sheeting machine, for example, a roll-to-roll hot roll forming machine at the speed of 2m per minute at 60°C under the pressure of 0.7 ton per cm, to form a negative electrode active material layer, to manufacture a negative electrode.

[Example 2]

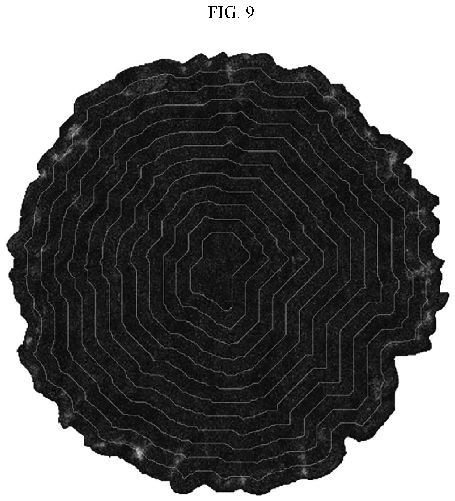

Electrode granules were manufactured by the same method as Example 1 except that the spray dryer was controlled to the inlet temperature of 180°C and the outlet temperature of 130°C. The average particle size $D_{50}$ of the obtained electrode granules was 61.4 $\mu$m, and the aspect ratio was 0.99. FIG. 9 is a cross-sectional image of the electrode granule particle manufactured in Example 2 by EPMA processing described below. The closed curves indicated in the image are a representation of a connection of points having the same distance from the surface.

[Example 3]

Electrode granules were manufactured by the same method as Example 1 except that the spray dryer was controlled to the inlet temperature of 200°C and the outlet temperature of 110°C. The average particle size $D_{50}$ of the obtained electrode granules was 35.8 $\mu$m, and the aspect ratio was 0.77.

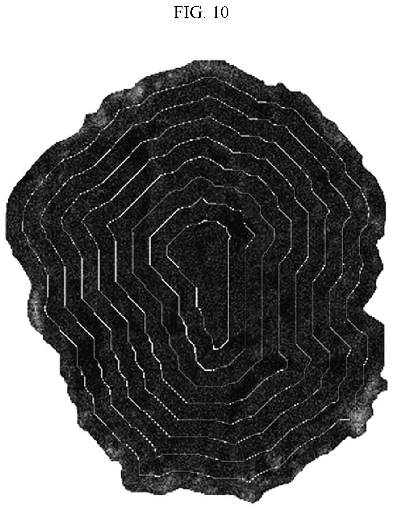

FIG. 10 is a cross-sectional image of the electrode granule particle manufactured in Example 3 by EPMA processing described below. The closed curves indicated in the image are a representation of a connection of points having the same distance from the surface.

[Example 4]

96g of natural graphite, 1g of carbon black as a conductive material and 3g of polytetrafluoroethylene (PTFE) as a binder were fed into a blender and mixed at 10,000 rpm for 1 minute to prepare a mixture. The temperature of the kneader was stabilized to 80°C, and the mixture was fed into the kneader which in turn, operated at 25 rpm for 5 minutes under the cap pressure of 1.1 atmosphere pressure to obtain a mixture mass. The mixture mass was fed into the blender to grind at 10,000 rpm for 30 seconds to obtain an electrode mixture powder. The obtained electrode mixture powder was screened in a multistage screening machine to 150 $\mu$m or more and 1000 $\mu$m or less. Subsequently, the screened electrode powder was fed into a lab calender (roll diameter 200 mm, roll temperature 100°C, roll speed ratio 1.5) to perform a calendering process multiple times to manufacture an electrode film.
Two sheets of electrode films were placed on two surfaces of the current collector having the primer layer and laminated through compression rolls that was maintained at 100°C to manufacture a negative electrode. In this instance, in the lamination step, the rolling ratio of the electrode film was 39%. The rolling ratio of the electrode film was calculated as a ratio of thickness of the electrode film after the lamination to thickness of the electrode film before the lamination.

[Comparative Example 1]

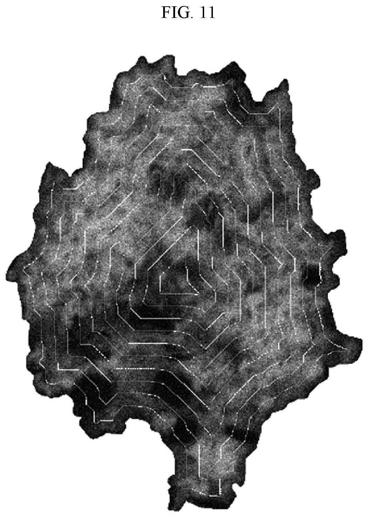

Electrode granules were manufactured by the same method as Example 1 except that the spray dryer was controlled to the inlet temperature of 170°C and the outlet temperature of 70°C. The average particle size $D_{50}$ of the obtained electrode granules was 42.8 $\mu$m, and the aspect ratio was 0.75. Additionally, a negative electrode was manufactured by the same method as Example 1 except that instead of the electrode granules manufactured in Example 1, the electrode granules manufactured in Comparative Example 1 were applied. Comparative Example 1 exhibited the aspect ratio of 0.75 or less due to slight overdrying, failing to form uniform spherical particles, and had a big deviation between particles. FIG. 11 is a cross-sectional image of the electrode granule particle manufactured in Comparative Example 1 by EPMA processing described below. Referring to FIG. 11, it was confirmed that the binder resin (bright) was distributed over the entire cross section of the electrode granule. The closed curves indicated in the image are a representation of a connection of points having the same distance from the surface.

[Comparative Example 2]

Electrode granules were manufactured by the same method as Example 1 except that the spray dryer was controlled to the inlet temperature of 170°C and the outlet temperature of 140°C. The average particle size $D_{50}$ of the obtained electrode granules was 78.0 $\mu$m, and the aspect ratio was 0.37. In Comparative Example 2, due to a small difference between the inlet temperature and the outlet temperature, the solvent was not sufficiently removed and particles containing a large amount of remaining solvent were formed, thereby failing to form spherical particles of a uniform shape, resulting in high moisture content and agglomeration between particles.

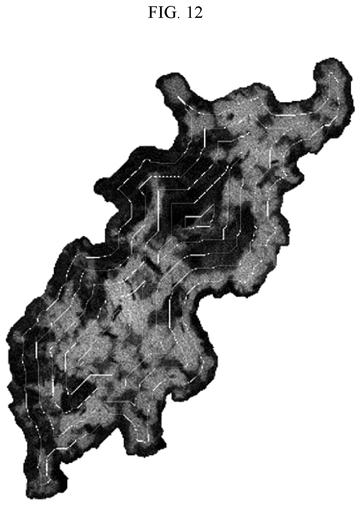

FIG. 12 is a cross-sectional image of the electrode granule particle manufactured in Comparative Example 2 by EPMA processing described below. Referring to FIG. 12, it was confirmed that the binder resin (bright) was distributed over the entire cross section of the electrode granule. The closed curves indicated in the image are a representation of a connection of points having the same distance from the surface.

[Comparative Example 3]

19.1 parts by weight of natural graphite having the average sphericity of 0.95 and 76.5 parts by weight of artificial graphite having the average sphericity of 0.9 as a negative electrode active material, 1 part by weight of carbon black (Super-C 65) as a negative electrode conductive material, 2.3 parts by weight of styrene-butadiene rubber (SBR) as a negative electrode binder, 1.1 parts by weight of carboxymethyl cellulose (CMC) as a binder and thickening agent, and water as a dispersion medium were mixed to prepare a slurry containing 47 wt% solids.

The slurry was coated on each surface of a 10 $\mu$m thick copper (Cu) thin film as a negative electrode current collector, and dried using a dryer equipped with a hot air blower and an IR heater to form upper and lower active material layers, and the upper and lower active material layers were roll-pressed at the same time to manufacture a negative electrode having a negative electrode active material layer with the loading level of 400 mg/25cm$^2$ per unit area (weight basis) after drying.

[Determination of binder distribution in negative electrode active material layer]

The negative electrodes manufactured in Example 1, Example 4 and Comparative Example 3 were placed in glassware using $OsO_4$ crystals or aqueous solution and subjected to sufficient chemical reaction (deposition) for 3 hours or more by evaporation of the reagent. Subsequently, the negative electrode having reacted with Os was milled using Ar ion milling to prepare negative electrode cross sections of Example and Comparative Example.

EDS mapping of the constituent elements in the negative electrode active material layer of the negative electrode cross section of each of Example 1, Example 4 and Comparative Example 3 in the thickness direction was performed using the EDS detector of the SEM equipment.

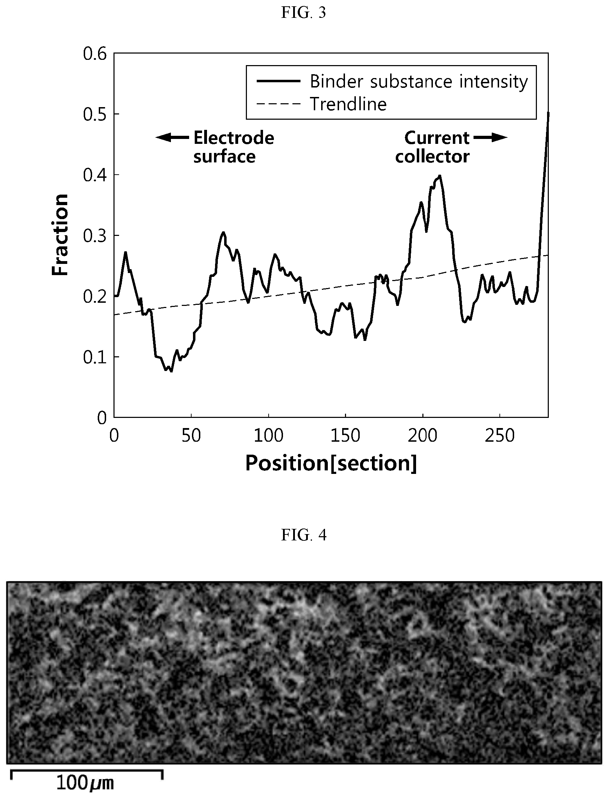

FIG. 2 shows the EDS mapping results of the electrode of Example 1, and FIG. 4 shows the EDS mapping results of the electrode of Comparative Example 3. Referring to FIGS. 2 and 4, it was confirmed that the electrode of Example 1 has a larger binder resin distribution in the electrode granule surface portion than the electrode granule central portion. Additionally, it was confirmed that the electrode of Example 1 manufactured by the close packing of the electrode granules has uniform binder distribution in the thickness direction of the electrode. In contrast, it was confirmed that the electrode of Comparative Example 3 has a high binder content ratio in the electrode surface layer portion. As opposed to the electrode manufacturing method of Example 1, the electrode of Comparative Example 3 is manufactured by electrode slurry coating and drying, and the binder distribution results from binder migration caused by the evaporation of the solvent.

Meanwhile, each of FIGS. 3 and 5 is a graph by extracting a line profile from the EDS mapping results in the thickness direction of the negative electrode active material layer, and extracting the average of Os content of the binder bonded to Os of the negative electrode active material layer surface area (up to 15% in a direction from the surface toward the current collector) and the average of Os content of the binder bonded to Os of the electrode layer bottom area (up to 15% in a direction from the current collector to the surface layer portion) among the extracted line profile results. FIG. 3 shows the electrode of Example 1, and FIG. 5 shows the electrode of Comparative Example 3. Referring to FIGS. 3 and 5, it was confirmed that the electrode according to Example 1 has a smaller binder distribution deviation in the thickness direction of the electrode than the electrode of Comparative Example 3.

Meanwhile, the electrode of Example 4 includes the fluorine-based binder and as described above, as a result of EDS mapping and QBR calculation, QBR of 1.1 or less was identified.

[Measurement of Ohmic resistance and its change (percent or quantity) with change in charge SOC]

A lithium ion secondary battery was manufactured using each electrode of Example 1, Example 2, Example 4 and Comparative Example 3, and Ohmic resistance as a function of charge SOC and its change (percent or quantity) was determined for each battery.

$LiNi_{0.8}Co_{0.1}Mn_{0.1}O_2$ as a positive electrode active material, carbon black as a conductive material and polyvinylidene fluoride (PVdF) as a binder were added to N-methyl pyrrolidone (NMP) as a solvent at a weight ratio of 96:2:2 to prepare a positive electrode active material slurry. The positive electrode active material slurry was coated on a sheetshaped aluminum current collector and dried to prepare a positive electrode with the final positive electrode loading of 4.0 mAh/cm$^2$.

The as-prepared positive electrode and each negative electrode manufactured in Example 1, Example 2, Example 4 and Comparative Example 3 were placed with a separator interposed between them, and pressed at 70°C under the pressure of 6.5 MPa for 20 seconds to manufacture an electrode assembly. A coin cell was fabricated using the electrode assembly, and a nonaqueous electrolyte solution containing 1M $LiPF_6$ in an organic solvent (Ethylene carbonate : Diethyl carbonate = 1:1(v:v)) was injected to manufacture a lithium secondary battery.

Subsequently, resistance was measured as a function of SOC for each battery. First, the obtained battery was charged at 0.33 C-rate from 2.5V to 4.2V in a CC-CV mode (0.05C cut off), and after resting for 10 minutes, discharged at 0.33 C-rate from 4.2V to 2.5V in a CC mode. This process was repeated three times. The charge/discharge was done at 25°C. Subsequent to 30-minute rest of the battery after the discharge, the resistance was determined through an in situ electrochemical impedance spectroscopy (EIS) measurement method. EIS was measured while charging in a manner that two channels was connected to each battery, charging was done in one channel and EIS was measured in the other channel at a predetermined time interval. The measurement was done from SOC 0% to SOC 100% by SOC 1% during charging at 0.33 C-rate at room temperature (25°C). The SOC was based on the battery capacity determined through the charge/discharge of the battery.

Resistance was measured through the EIS analysis results at 25°C in the scan range between 100000 Hz and 10000Hz with the amplitude of 10 mV using Solaton 1470E cell test system and frequency response analyzer 1255B. In the instance, each of Ohmic resistance and ct resistance at each SOC and their change (percent or quantity) was calculated from the obtained Nyquist plot. The change of Ohmic resistance and ct resistance (percent) was measured by SOC 1%. The Ohmic resistance change (percent) was calculated based on the following Equation 1.

(Equation 1) Ohmic resistance change (mic Resistance change) = $(R_{soc}/R_i) \times 100$

In the above Equation 1, $R_i$ denotes Ohmic resistance at the lowest SOC at which Ohmic resistance and charge transfer resistance can be distinguished from the Nyquist plot, and $R_{soc}$ denotes Ohmic resistance at each SOC.

FIG. 19 shows the ratio of Ohmic resistance and ct resistance for each SOC as measured through the batteries of Example 1, Example 2 and Example 4. Meanwhile, SOC is a percentage (%) of the currently available battery capacity divided by the total capacity to determine the residual capacity of the battery. Referring to FIG. 19, it was confirmed that the batteries of Example 1, Example 2 and Example 4 tend to reduce Ohmic resistance with increasing SOC.

Meanwhile, FIG. 17 shows the measured Ohmic resistance for each SOC range in the batteries of Example 1, Example 2 and Example 4. Additionally, FIG. 18 shows the reduction in Ohmic resistance for each SOC range in Example 1, Example 2, Example 4 and Comparative Example 3. The lithium ion secondary battery according to the present disclosure may tend to reduce Ohmic resistance with increasing SOC during charging. Additionally, it was confirmed that the lithium ion secondary battery according to the present disclosure has a negative (-) Ohmic resistance change with increasing SOC during charging. Referring to these drawings, it was confirmed that the batteries of Example 1, Example 2 and Example 4 have a larger Ohmic resistance change in the initial range and in the range of SOC 20% or less, SOC 30% or less, SOC 40% or less and SOC 50% or less than in the range of SOC 20% or more, SOC 30% or more, SOC 40% or more and SOC 50% or more, respectively. In contrast, it was confirmed that the battery (including the wet electrode alone) of Comparative Example 3 has a small resistance change as a function of SOC, compared to Example.

As noted above, the secondary battery according to the present disclosure may eliminate the slurry drying process in the manufacture of the electrode, thereby improving the process convenience, and achieve uniform distribution of the binder resin and the electrode active material in the electrode active material layer in the thickness direction, thereby improving the bond strength between the electrode active material layer and the current collector. Additionally, as the charge SOC increases, the reduction in Ohmic resistance may increase, and it may have a beneficial effect on thermal management during fast charging of the battery.

[Binder distribution determination in electrode granule]

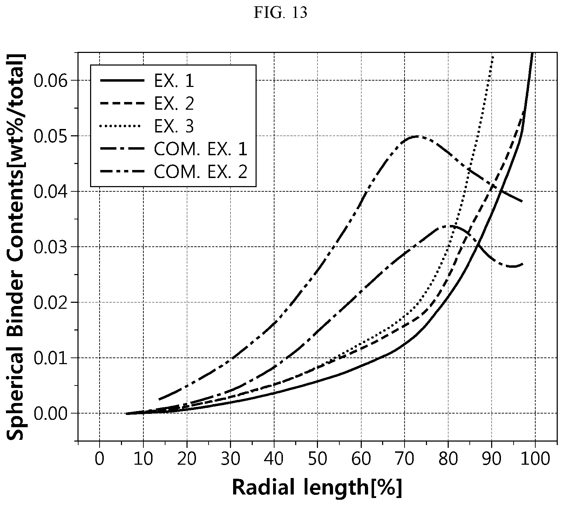

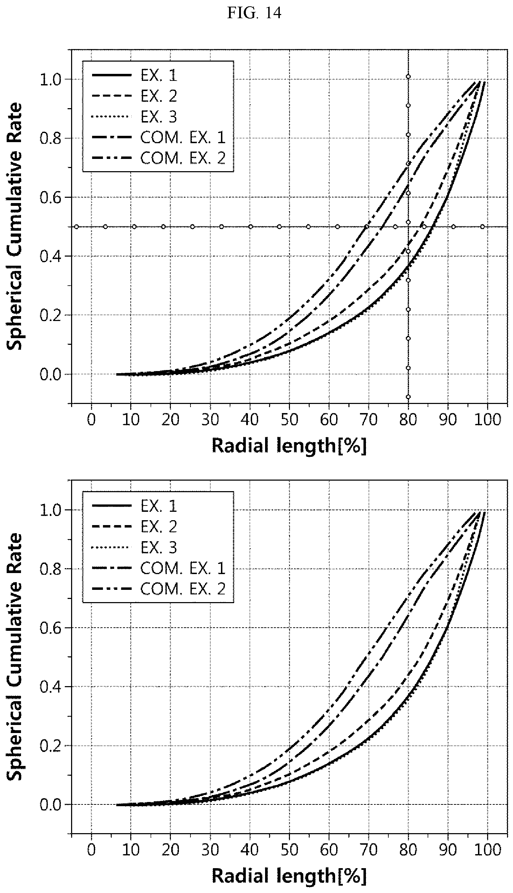

The binder distribution in the electrode granule was determined by radial profile analysis of the electrode granule cross section using EPMA (JXA-8350F, -15kV, 20nA stage mapping condition). First, the binder in the electrode granule obtained in each of Examples 1 and 2 was stained using $OsO_4$. The staining was done by placing the electrode granule in glassware using $OsO_4$ crystals or aqueous solution and causing reaction by evaporation of the reagent. Subsequently, it was mixed with epoxy resin and the mixture was put into a silicone mold to cure it to obtain an electrode granule matrix (see FIG. 15). Subsequently, the electrode granule matrix was milled to prepare a cross section sample using an ion milling machine (Hitachi IM5000 acceleration voltage: 6kV). As the cross section preparation conditions, the acceleration voltage was 6 kV, the emission current was 400 $\mu$A, and the milling time was properly adjusted to prevent the mask from being completely removed. The manufactured cross section sample was tightly held on the EPMA equipment such that the electrode granule was located at the center of the display and cross section scanning was performed by a stage mapping method. When scanning is completed, an image was created in the form of a mass map, taking into account the atomic number effect, absorption effect, and fluorescence excitation effect. From the obtained mass map, 0~4wt% of elements were set to 0~255 5 contrast and an Os map was extracted. The backscattered electron image obtained during the EPMA analysis and the Os map were combined into one layer using Photoshop, a closed curve was drawn every 30 pixels from the boundary of the obtained electrode granule, and the Os content located at each closed curve was analyzed. The Os content was supplemented by the introduction of the surface area of the closed curve of the corresponding location for the comparison of the relative amount for each location. FIG. 13 shows the distribution (quantity) of the binder resin in each part along the radius of the electrode granule of each Example and Comparative Example. FIG. 14 shows the cumulative distribution of the binder resin along the radius of the electrode granule of each Example and Comparative Example. Referring to FIGS. 13 and 14, it was confirmed that the electrode granules of Example 1, Example 2 and Example 4 have higher binder content in the surface portion up to the electrode granule surface after 70%, in particular, 80% of the radius than the central portion. In contrast, it was confirmed that the electrode granules obtained in Comparative Example 1 and Comparative Example 2 have higher binder content in the central portion than the surface portion.

**Claims**

1. A lithium ion secondary battery including a dry electrode manufactured by a dry manufacturing method,

   wherein the dry electrode includes an electrode active material layer including an electrode active material and an electrode binder,
   wherein the electrode active material layer includes granules as a result of spraydrying a composition including the electrode active material and the electrode binder, or a composite material in which the electrode active material is combined with the fibrillated electrode binder, or both, and
   wherein the lithium ion secondary battery changes in Ohmic resistance with a change in charge SOC.

2. The lithium ion secondary battery according to claim 1,
   wherein the change in Ohmic resistance is a decrease of Ohmic resistance with increasing charge SOC.

3. The lithium ion secondary battery according to claim 1,
   wherein an Ohmic resistance change is larger in a range of SOC 50% or less than in a range of SOC 50% or more.

4. The lithium ion secondary battery according to claim 1,
   wherein the electrode active material includes a negative electrode active material, and the dry electrode is a negative electrode.

5. The lithium ion secondary battery according to claim 1,

   wherein the dry electrode includes a current collector; and an electrode active material layer on the current collector, the electrode active material layer in which the granules are packed closer together, and
   wherein the granules have a larger amount of the electrode binder of a surface portion than the electrode binder of a central portion based on a total weight 100 wt% of the electrode active material and the electrode binder, wherein the surface portion is an area up to 20% of a radius in a direction from a surface of the granules for the electrode to a center of the granules for the electrode, and the central portion is an area other than the surface portion.

6. The lithium ion secondary battery according to claim 5,
   wherein the surface portion is an area up to 10% of the radius in the direction from the surface of the granules for the electrode to the center of the granules for the electrode.

7. The lithium ion secondary battery according to claim 5,
   wherein the granules for the electrode have an aspect ratio of from 0.75 to 1.0.

8. The lithium ion secondary battery according to claim 5,
   wherein the granules for the electrode have a particle size ($D_{50}$) of from 0.1 $\mu$m to 1,000 $\mu$m.

9. The lithium ion secondary battery according to claim 1,
   wherein the electrode active material layer includes two or more electrode active materials.

10. The lithium ion secondary battery according to claim 1,
    wherein the lithium ion secondary battery has a higher average value of Ohmic resistance in a range between SOC 0% and SOC 20% than an average value of Ohmic resistance in a range of SOC 80% or more.

**11.** The lithium ion secondary battery according to claim 1,
wherein the lithium ion secondary battery has a lower Ohmic resistance in a range of SOC 10% or more than in a range of SOC 10% or less.

**12.** The lithium ion secondary battery according to claim 1,
wherein the lithium ion secondary battery has a difference between the Ohmic resistance at SOC 80% and the Ohmic resistance at SOC 5% that is 1% or more of a difference between a minimum value and a maximum value of the Ohmic resistance in an entire SOC measurement range.

**13.** The lithium ion secondary battery according to claim 1,
wherein the lithium ion secondary battery has at least one tangent line having a negative gradient in a resistance change graph over an entire SOC measurement range.

**14.** The lithium ion secondary battery according to claim 1,
wherein the lithium ion secondary battery has a larger initial Ohmic resistance change in an SOC range than a subsequent range.

FIG. 1

FIG. 2

FIG. 3

FIG. 4

100μm

FIG. 5

FIG. 6

10

FIG. 7

FIG. 8

FIG. 9

FIG. 10

FIG. 11

FIG. 12

FIG. 13

FIG. 14

FIG. 15

FIG. 16

100

101
102

FIG. 17

FIG. 18

FIG. 19

|  |  | SOC 10% | SOC 30% | SOC 80% |
|---|---|---|---|---|
| EX. 1 | Rohm (Rohm) | 0.557 | 0.481 | 0.436 |
|  | Rct (Rohm) | 0.698 | 0.594 | 0.586 |
| EX. 2 | Rohm (Rohm) | 0.845 | 0.729 | 0.655 |
|  | Rct (Rohm) | 0.89 | 0.724 | 0.68 |
| EX. 4 | Rohm (Rohm) | 0.564 | 0.522 | 0.479 |
|  | Rct (Rohm) | 0.702 | 0.584 | 0.567 |

## INTERNATIONAL SEARCH REPORT

International application No.

**PCT/KR2024/011540**

### A. CLASSIFICATION OF SUBJECT MATTER

**H01M 4/133**(2010.01)i; **H01M 4/1393**(2010.01)i; **H01M 4/36**(2006.01)i; **H01M 4/587**(2010.01)i; **H01M 4/62**(2006.01)i; **H01M 4/04**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/133(2010.01); B05D 3/12(2006.01); B05D 5/12(2006.01); H01G 11/24(2013.01); H01G 11/42(2013.01); H01G 9/00(2006.01); H01M 10/0525(2010.01); H01M 4/13(2010.01); H01M 4/139(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이온 이차전지(lithium-ion secondary battery), 건식(dry method), 분무 건조 (spray drying), 그래뉼(granule), SOC(state of charge), 옴 저항(ohmic resistance), 섬유화(fibrillation), 바인더(binder), 표면 (surface)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0090744 A (MAXWELL TECHNOLOGIES, INC.) 29 July 2020 (2020-07-29) See claims 1, 6 and 12; and paragraphs [0050], [0059], [0074], [0075], [0085], [0086], [0088] and [0118]-[0120]. | 1-4,9-14 |
| Y | | 5-8 |
| Y | KR 10-2017-0028978 A (TOYOTA JIDOSHA KABUSHIKI KAISHA et al.) 14 March 2017 (2017-03-14) See claim 1; and paragraphs [0007]-[0010], [0036]-[0038], [0072] and [0080]-[0090]. | 5-8 |
| A | KR 10-2017-0086528 A (ZEON CORPORATION) 26 July 2017 (2017-07-26) See abstract; claim 1; and paragraphs [0185]-[0207]. | 1-14 |
| A | KR 10-1998658 B1 (ZEON CORPORATION) 10 July 2019 (2019-07-10) See abstract; claim 1; and paragraphs [0099]-[0109]. | 1-14 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 November 2024** | **21 November 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/011540** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2006-0025230 A (MAXWELL TECHNOLOGIES, INC.) 20 March 2006 (2006-03-20)<br>See abstract; and claims 1, 76, 77 and 100. | 1-14 |

Form PCT/ISA/210 (second sheet) (July 2022)

**INTERNATIONAL SEARCH REPORT**
Information on patent family members

International application No.

**PCT/KR2024/011540**

| Patent document cited in search report | | | Publication date (day/month/year) | Patent family member(s) | | | Publication date (day/month/year) |
|---|---|---|---|---|---|---|---|
| KR | 10-2020-0090744 | A | 29 July 2020 | AU | 2018-372708 | A1 | 19 March 2020 |
| | | | | AU | 2018-372708 | B2 | 02 May 2024 |
| | | | | AU | 2024-205471 | A1 | 22 August 2024 |
| | | | | CN | 111436199 | A | 21 July 2020 |
| | | | | EP | 3713876 | A1 | 30 September 2020 |
| | | | | JP | 2021-504877 | A | 15 February 2021 |
| | | | | JP | 2024-056867 | A | 23 April 2024 |
| | | | | US | 2019-0237748 | A1 | 01 August 2019 |
| | | | | WO | 2019-103874 | A1 | 31 May 2019 |
| KR | 10-2017-0028978 | A | 14 March 2017 | CN | 106537653 | A | 22 March 2017 |
| | | | | CN | 106537653 | B | 07 May 2019 |
| | | | | JP | 2016-018762 | A | 01 February 2016 |
| | | | | JP | 6077495 | B2 | 08 February 2017 |
| | | | | KR | 10-1889236 | B1 | 16 August 2018 |
| | | | | US | 10276855 | B2 | 30 April 2019 |
| | | | | US | 2017-0170452 | A1 | 15 June 2017 |
| | | | | WO | 2016-006197 | A1 | 14 January 2016 |
| KR | 10-2017-0086528 | A | 26 July 2017 | CN | 107078302 | A | 18 August 2017 |
| | | | | CN | 107078302 | B | 06 April 2021 |
| | | | | EP | 3223348 | A1 | 27 September 2017 |
| | | | | EP | 3223348 | A4 | 05 December 2018 |
| | | | | EP | 4068320 | A2 | 05 October 2022 |
| | | | | EP | 4068320 | A3 | 12 July 2023 |
| | | | | JP | 6610559 | B2 | 27 November 2019 |
| | | | | US | 11239490 | B2 | 01 February 2022 |
| | | | | US | 2017-0317378 | A1 | 02 November 2017 |
| | | | | US | 2019-0229368 | A1 | 25 July 2019 |
| | | | | WO | 2016-080145 | A1 | 26 May 2016 |
| KR | 10-1998658 | B1 | 10 July 2019 | CN | 103907226 | A | 02 July 2014 |
| | | | | EP | 2757620 | A1 | 23 July 2014 |
| | | | | EP | 2757620 | A4 | 08 July 2015 |
| | | | | JP | 2013-077558 | A | 25 April 2013 |
| | | | | JP | 2013-077559 | A | 25 April 2013 |
| | | | | JP | 2013-077560 | A | 25 April 2013 |
| | | | | JP | 2013-077561 | A | 25 April 2013 |
| | | | | KR | 10-2014-0063789 | A | 27 May 2014 |
| | | | | US | 2014-0342225 | A1 | 20 November 2014 |
| | | | | WO | 2013-039131 | A1 | 21 March 2013 |
| KR | 10-2006-0025230 | A | 20 March 2006 | CA | 2465086 | A1 | 22 October 2004 |
| | | | | CN | 101194384 | A | 04 June 2008 |
| | | | | CN | 102569719 | A | 11 July 2012 |
| | | | | CN | 102569719 | B | 05 April 2017 |
| | | | | CN | 1838999 | A | 27 September 2006 |
| | | | | CN | 1838999 | B | 18 April 2012 |
| | | | | EP | 1644136 | A2 | 12 April 2006 |
| | | | | EP | 1644136 | B1 | 29 August 2018 |
| | | | | EP | 1644136 | B8 | 03 April 2019 |
| | | | | EP | 1766706 | A1 | 28 March 2007 |
| | | | | EP | 1766706 | B1 | 14 November 2018 |
| | | | | EP | 1882277 | A1 | 30 January 2008 |

Form PCT/ISA/210 (patent family annex) (July 2022)

## INTERNATIONAL SEARCH REPORT
### Information on patent family members

International application No.

**PCT/KR2024/011540**

| Patent document cited in search report | Publication date (day/month/year) | Patent family member(s) | | | Publication date (day/month/year) |
|---|---|---|---|---|---|
| | | EP | 2357043 | A2 | 17 August 2011 |
| | | EP | 2357043 | A3 | 05 October 2011 |
| | | EP | 2357044 | A2 | 17 August 2011 |
| | | EP | 2357044 | A3 | 05 October 2011 |
| | | EP | 2357045 | A2 | 17 August 2011 |
| | | EP | 2357045 | A3 | 05 October 2011 |
| | | EP | 2357046 | A2 | 17 August 2011 |
| | | EP | 2357046 | A3 | 05 October 2011 |
| | | EP | 2357046 | B1 | 04 December 2013 |
| | | EP | 3467918 | A1 | 10 April 2019 |
| | | EP | 3498385 | A1 | 19 June 2019 |
| | | EP | 3498385 | B1 | 07 April 2021 |
| | | EP | 3863079 | A1 | 11 August 2021 |
| | | ES | 2699850 | T3 | 13 February 2019 |
| | | ES | 2705475 | T3 | 25 March 2019 |
| | | ES | 2879335 | T3 | 22 November 2021 |
| | | HU | E041349 | T2 | 28 May 2019 |
| | | HU | E054796 | T2 | 28 September 2021 |
| | | JP | 2007-531245 | A | 01 November 2007 |
| | | JP | 2008-541339 | A | 20 November 2008 |
| | | JP | 2011-109115 | A | 02 June 2011 |
| | | JP | 4772673 | B2 | 14 September 2011 |
| | | KR | 10-1211968 | B1 | 13 December 2012 |
| | | KR | 10-2008-0005584 | A | 14 January 2008 |
| | | US | 10547057 | B2 | 28 January 2020 |
| | | US | 11430613 | B2 | 30 August 2022 |
| | | US | 2005-0057888 | A1 | 17 March 2005 |
| | | US | 2005-0186473 | A1 | 25 August 2005 |
| | | US | 2005-0250011 | A1 | 10 November 2005 |
| | | US | 2005-0266298 | A1 | 01 December 2005 |
| | | US | 2005-0271798 | A1 | 08 December 2005 |
| | | US | 2006-0109608 | A1 | 25 May 2006 |
| | | US | 2006-0114643 | A1 | 01 June 2006 |
| | | US | 2006-0133012 | A1 | 22 June 2006 |
| | | US | 2006-0133013 | A1 | 22 June 2006 |
| | | US | 2006-0137158 | A1 | 29 June 2006 |
| | | US | 2006-0143884 | A1 | 06 July 2006 |
| | | US | 2006-0146475 | A1 | 06 July 2006 |
| | | US | 2006-0146479 | A1 | 06 July 2006 |
| | | US | 2006-0147712 | A1 | 06 July 2006 |
| | | US | 2006-0148112 | A1 | 06 July 2006 |
| | | US | 2006-0148191 | A1 | 06 July 2006 |
| | | US | 2006-0246343 | A1 | 02 November 2006 |
| | | US | 2007-0026317 | A1 | 01 February 2007 |
| | | US | 2007-0122698 | A1 | 31 May 2007 |
| | | US | 2007-0190424 | A1 | 16 August 2007 |
| | | US | 2008-0016664 | A1 | 24 January 2008 |
| | | US | 2008-0092808 | A1 | 24 April 2008 |
| | | US | 2008-0102371 | A1 | 01 May 2008 |
| | | US | 2008-0117564 | A1 | 22 May 2008 |

Form PCT/ISA/210 (patent family annex) (July 2022)

**INTERNATIONAL SEARCH REPORT**
Information on patent family members

International application No.

**PCT/KR2024/011540**

| Patent document cited in search report | Publication date (day/month/year) | Patent family member(s) | | | Publication date (day/month/year) |
|---|---|---|---|---|---|
| | | US | 2008-0117565 | A1 | 22 May 2008 |
| | | US | 2008-0206446 | A1 | 28 August 2008 |
| | | US | 2008-0236742 | A1 | 02 October 2008 |
| | | US | 2008-0266753 | A1 | 30 October 2008 |
| | | US | 2009-0223630 | A1 | 10 September 2009 |
| | | US | 2009-0239127 | A1 | 24 September 2009 |
| | | US | 2009-0290288 | A1 | 26 November 2009 |
| | | US | 2010-0014215 | A1 | 21 January 2010 |
| | | US | 2010-0033901 | A1 | 11 February 2010 |
| | | US | 2010-0119699 | A1 | 13 May 2010 |
| | | US | 2010-0263910 | A1 | 21 October 2010 |
| | | US | 2011-0114896 | A1 | 19 May 2011 |
| | | US | 2011-0165318 | A9 | 07 July 2011 |
| | | US | 2011-0299219 | A1 | 08 December 2011 |
| | | US | 2012-0040243 | A1 | 16 February 2012 |
| | | US | 2013-0157141 | A1 | 20 June 2013 |
| | | US | 2015-0072234 | A1 | 12 March 2015 |
| | | US | 2017-0098826 | A1 | 06 April 2017 |
| | | US | 2020-0152987 | A1 | 14 May 2020 |
| | | US | 7090946 | B2 | 15 August 2006 |
| | | US | 7102877 | B2 | 05 September 2006 |
| | | US | 7227737 | B2 | 05 June 2007 |
| | | US | 7295423 | B1 | 13 November 2007 |
| | | US | 7342770 | B2 | 11 March 2008 |
| | | US | 7352558 | B2 | 01 April 2008 |
| | | US | 7384433 | B2 | 10 June 2008 |
| | | US | 7492571 | B2 | 17 February 2009 |
| | | US | 7495349 | B2 | 24 February 2009 |
| | | US | 7508651 | B2 | 24 March 2009 |
| | | US | 7722686 | B2 | 25 May 2010 |
| | | US | 7791860 | B2 | 07 September 2010 |
| | | US | 7791861 | B2 | 07 September 2010 |
| | | US | 7851238 | B2 | 14 December 2010 |
| | | US | 7883553 | B2 | 08 February 2011 |
| | | US | 7920371 | B2 | 05 April 2011 |
| | | US | 7935155 | B2 | 03 May 2011 |
| | | US | 8072734 | B2 | 06 December 2011 |
| | | US | 8213156 | B2 | 03 July 2012 |
| | | US | 8815443 | B2 | 26 August 2014 |
| | | US | 9525168 | B2 | 20 December 2016 |
| | | WO | 2005-008807 | A2 | 27 January 2005 |
| | | WO | 2005-008807 | A3 | 09 June 2005 |
| | | WO | 2006-001847 | A1 | 05 January 2006 |
| | | WO | 2006-135495 | A1 | 21 December 2006 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020230101870